(19)

Europäisches Patentamt
European Patent Office
Office européen des brevets

(11) **EP 4 729 298 A1**

(12) **EUROPEAN PATENT APPLICATION**
published in accordance with Art. 153(4) EPC

(43) Date of publication:
**22.04.2026 Bulletin 2026/17**

(21) Application number: **24846093.3**

(22) Date of filing: **26.07.2024**

(51) International Patent Classification (IPC):
**B32B 37/08** (2006.01)    **B32B 37/10** (2006.01)
**B32B 37/06** (2006.01)    **B32B 15/08** (2006.01)
**B32B 3/30** (2006.01)    **B32B 3/28** (2006.01)

(52) Cooperative Patent Classification (CPC):
**B32B 3/28; B32B 3/30; B32B 15/08; B32B 37/06;
B32B 37/08; B32B 37/10**

(86) International application number:
**PCT/KR2024/010968**

(87) International publication number:
**WO 2025/023792 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.07.2023  KR 20230098469
24.10.2023  KR 20230143283**

(71) Applicant: **LG Chem, Ltd.
Seoul 07336 (KR)**

(72) Inventors:
• **JEON, Ki Ung
Daejeon 34122 (KR)**
• **IM, Dam Hyeok
Daejeon 34122 (KR)**
• **YOON, Jung Hwan
Daejeon 34122 (KR)**
• **UM, Jun Geun
Daejeon 34122 (KR)**
• **JUNG, Jin Mi
Daejeon 34122 (KR)**
• **MOON, Sung Nam
Daejeon 34122 (KR)**

(74) Representative: **Hoffmann Eitle
Patent- und Rechtsanwälte PartmbB
Arabellastraße 30
81925 München (DE)**

(54) **COMPOSITE MATERIAL**

(57)    The present specification discloses a composite material and a use thereof. The present specification discloses a composite material comprising a plastic plate and a metal plate which are bonded to each other while exhibiting excellent bonding force, wherein an internal space may be formed at the joint interface between the plastic plate and the metal plate, and in the internal space, excellent airtightness is ensured together with the excellent bonding force. The present specification also discloses a composite material exhibiting excellent bonding force and excellent airtightness while having a large area. The present specification also discloses a use of the composite material.

[Figure 1]

EP 4 729 298 A1

## Description

### Technical Field

This application claims the benefit of priority based on Korean Patent Application No. 10-2023-0098469 dated July 27, 2023, and Korean Patent Application No. 10-2023-0143283 dated October 24, 2023, the disclosures of which are incorporated herein by reference in their entirety.
This specification discloses a composite material and a use thereof.

### Background Art

Technologies for firmly attaching dissimilar materials such as metals and plastics without appearance deformation are useful in various fields.
Heat dissipation materials such as a heat sink are usually made of metals with high thermal conductivity. However, the metals are generally disadvantageous in weight reduction and have a low shape freedom degree. Therefore, in the heat dissipation material such as the heat sink, if a part where heat transfer is mainly required is formed of metal and the other parts are formed of a material such as a plastic, it is possible to provide a material satisfying both heat transfer characteristics and lightweight characteristics simultaneously, and having a high design freedom degree in terms of shape.
However, it is not easy to attach dissimilar materials such as metals and plastics firmly and stably.
For example, even when using an adhesive material, it is not easy to secure high adhesion force between metals and plastics, which are dissimilar materials, and their durability. This is because adhesive materials exhibiting high adhesion force to metals and high adhesion force to plastics simultaneously time are rare.
In addition, to obtain the heat sink, an internal space (cavity) through which a cooling medium can flow must be formed at a joint interface of dissimilar materials. To improve heat dissipation characteristics, the area of the internal space must be increased, but as the internal space increases, the bonding area between the metal and the plastic decreases.
It is a difficult problem to manufacture a composite material in which dissimilar materials are stably bonded while including the internal space. Particularly, when manufacturing a composite material having a large area, it becomes more difficult to meet the conditions.
Furthermore, to apply composite materials to components such as heat sinks, airtightness must be imparted to the internal space together with strong bonding between dissimilar materials.
For cooling and dissipation of heat, a cooling medium such as coolant or air is circulated inside the heat sink. Since such a cooling medium is usually a fluid, if the airtightness of the internal space is not secured, leakage of the cooling medium to the outside may occur. Such airtightness is not immediately secured simply by securing high bonding force.

### Disclosure

### Technical Problem

The present specification discloses a composite material and a use thereof. The present specification is intended to disclose a composite material including a plastic plate and a metal plate which are bonded to each other while exhibiting excellent bonding force. The present specification is intended to disclose a composite material in which an internal space is formed at the joint interface between the plastic plate and the metal plate, and excellent airtightness is secured in the internal space together with excellent bonding force. The present specification is also intended to disclose a content capable of securing excellent airtightness together with the excellent bonding force even when the composite material is manufactured on a large area. The present specification is also intended to disclose a use of the composite material.

### Technical Solution

Among physical properties mentioned in this specification, the physical property affected by a temperature is a physical property measured at room temperature, unless otherwise specified.
The term room temperature is a natural temperature without being artificially heated or cooled, which means, for example, any one temperature within a range of about 10°C to 30°C, for example, a temperature of about 23°C or about 25°C or so.
Unless specifically specified otherwise in this specification, the unit of the temperature is °C.
Among physical properties mentioned in this specification, the physical property affected by a pressure is a physical property measured at normal pressure, unless otherwise specified.
The term normal pressure is a natural pressure without being artificially pressurized or depressurized, in which a pressure within a range of about 700 mmHg to 800 mmHg is usually referred to as the normal pressure.

Among physical properties mentioned in this specification, the physical property affected by humidity is a physical property measured at standard state humidity, unless otherwise specified.

The standard state humidity means any humidity within a range of 40% to 60% in terms of relative humidity, for example, a relative humidity of about 40% or 60% or so.

The present specification discloses a composite material.

The term composite material means a material comprising at least dissimilar materials. For example, the composite material may comprise a plastic plate and a metal plate as dissimilar materials.

In the composite material, the plastic plate and the metal plate may be bonded to each other. The bonding may be bonding without mediating other materials such as an adhesive, where at least a partial region of the plastic plate and at least a partial region of the metal plate may be in direct contact with each other.

For example, the composite material may comprise a metal plate having a first surface, and a second surface which is the opposite surface of the first surface; and a plastic plate having a third surface, and a fourth surface which is the opposite surface of the third surface.

The first surface of the metal plate is any one of a surface with the largest area and the opposite surface of the surfaces of the metal plate, and the second surface is the surface opposite the first surface. The first and second surfaces may also have the same area. In addition, the third surface of the plastic plate is any one of a surface with the largest area and the opposite surface of the surfaces of the plastic plate, and the fourth surface is the surface opposite the third surface. The third and fourth surfaces may also have the same area.

For example, in the composite material, the first surface of the metal plate and the third surface of the plastic plate may be bonded to each other. In the structure, no other element may exist between the first surface of the metal plate and the third surface of the plastic plate. That is, any element to bond both plates to each other, such as an adhesive or a pressure-sensitive adhesive, may not exist between the metal plate and the plastic plate.

In this specification, the term "bonding region" is a region where the metal plate and the plastic plate are attached to each other. The bonding force of a certain level or higher may be secured in the bonding region. In one example, the bonding region may be a region where at least one or both plates of the metal plate and the plastic plate are attached to each other while being melted or softened, and then cooled again, for example, a region where the metal plate and the plastic plate are fused.

In the composite material, excellent and stable bonding force may be secured in the bonding region.

The type of the plastic plate included in the composite material is not particularly limited. For example, as the plastic plate, a plastic plate including a resin component and a filler component may be used.

The type of the resin component included in the plastic plate is not particularly limited. For example, as the resin component, a necessary type may be appropriately selected and used among resin components known to be shapable by applying heat, and the like.

For example, a thermoplastic polymer may be used as the resin component. The types of applicable thermoplastic polymers may include various crystalline or amorphous polymers, and an example thereof may be exemplified by polyolefin-based polymers such as PP (polypropylene) or PE (polyethylene), polyalkylene oxide-based polymers such as mPPO (modified PPO (polyethylene oxide)), polyamide-based polymers such as PA (polyamide), acetal-based polymers such as POM (polyoxymethylene), polyester-based polymers such as PC (polycarbonate), PBT (polybutylene terephthalate) or PET (polyethylene terephthalate), acrylic polymers such as PMMA (poly(methyl methacrylate)), and polystyrene-based polymers such as PS (polystyrene) or ABS (acrylonitrile butadiene styrene), and the like, but is not limited thereto. One or a mixture of two or more of the foregoing may be included in the plastic plate.

The ratio of the resin component in the plastic plate is not particularly limited. For example, based on the total weight of the plastic plate, the lower limit of the ratio of the resin component in the plastic plate may be 60 weight%, 65 weight%, 70 weight%, 75 weight%, or 80 weight% or so, and the upper limit thereof may be 100 weight%, 95 weight%, 90 weight%, 85 weight%, or 80 weight% or so. The ratio may be within a range of equal to or less than any one of the above-listed upper limits while being equal to or more than any one of the above-listed lower limits. As this ratio is close to a value in the composite material exemplified in an example, more improved effects may be expected.

The plastic plate may comprise a filler component as an additional component. Such a filler component may be included, for example, as a reinforcing material.

An example of the filler component is not particularly limited. For example, as a filler component, an organic filler or an inorganic filler, or an organic-inorganic filler, such as a glass filler, a carbon filler, and/or a silica filler, and the like may be applied.

The shape of the filler is determined according to the purpose, and is not particularly limited. For example, the filler may be a particulate filler (particulate filler with a spherical, rectangular, irregular or another shape), a plate-shaped filler or a fiber-shaped filler.

The thickness of the plastic plate is not particularly limited. The thickness of the plastic plate may be adjusted to an appropriate level considering physical properties such as the desired strength or bonding force, and the like. For example, the lower limit of the thickness of the plastic plate may be 0.5, 0.6, 0.7, 0.8, 0.9, 1.0, 1.1, 1.2, 1.3, 1.4, 1.5, 1.6, 1.7, 1.8, 1.9, or 2.0 or so, and the upper limit thereof may be 20.0, 19.0, 18.0, 17.0, 16.0, 15.0, 14.0, 13.0, 12.0, 11.0, 10.0, 9.0, 8.0, 7.0, 6.0, 5.0, 4.0, 3.0, or 2.0 or so. The unit of the thickness is mm. The thickness may be within a range of less than or equal to, or less than any one of the above-listed upper limits while being more than or equal to, or more than any one of the above-listed lower limits. As this thickness range is close to a value in the composite material exemplified in an example, more improved effects may be expected.

The type of metal plate included in the composite material is not particularly limited. The metal plate may be selected according to the application of the composite material. For example, when the composite material is applied as a heat dissipation material, a metal or metal alloy having a thermal conductivity in a certain level or more may be used.

For example, the lower limit of the thermal conductivity of the metal or metal alloy may be 5, 6, 7, 8, 9, 10, 11, 12, 13, 14, 15, 20, 25, 30, 35, 40, 45, 50, 55, 60, 65, 70, 75, 80, 85, 90, 95, 100, 120, 140, 160, 180, or 200 or so, and the upper limit thereof may be 1000, 900, 800, 700, 600, 500, 400, 300, 200, 190, 180, 170, or 160 or so. The unit of the thermal conductivity is W/mK. When applied as a heat dissipation material, the thermal conductivity may be within a range of more than or equal to, or more than any one of the above-listed lower limits; or within a range of less than, or equal to or less than any one of the above-listed upper limits while being more than or equal to, or more than any one of the above-listed lower limits. As this thermal conductivity range is close to a value in the composite material exemplified in an example, more improved effects may be expected.

An example of such a material includes metals such as aluminum, SUS (stainless steel), tungsten, iron, cast iron, and/or copper, or metal alloys containing the metals, but is not limited thereto.

The metal plate may have a unique melting temperature (Tm) depending on the type of metal. For example, the lower limit of the melting temperature of the metal plate may be 300°C, 350°C, 400°C, 450°C, 500°C, 550°C, 600°C, 650°C, 700°C, 750°C, 800°C, 850°C, 900°C, 950°C, 1000°C, 1050°C, 1100°C, 1150°C, 1200°C, 1250°C, 1300°C, 1350°C, or 1400°C or so, and the upper limit thereof may be 3000°C, 2500°C, 2000°C, 1900°C, 1800°C, 1700°C, 1600°C, 1500°C, 1400°C, 1300°C, 1200°C, 1100°C, 1000°C, 900°C, 850°C, 800°C, 750°C, or 700°C or so. The melting temperature of the metal plate may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the melting temperature range is close to a value in the composite material exemplified in an example, more improved effect may be expected.

The thickness of the metal plate is not particularly limited. The thickness of the metal plate may be adjusted to an appropriate level in consideration of the desired bonding force, thermal conductivity, and airtightness, and the like. For example, the lower limit of the thickness of the metal plate may be 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 or so, and the upper limit thereof may be 20.0, 19.5, 19.0, 18.5, 18.0, 17.5, 17.0, 16.5, 16.0, 15.5, 15.0, 14.5, 14.0, 13.5, 13.0, 12.5, 12.0, 11.5, 11.0, 10.5, 10.0, 9.5, 9.0, 8.5, 8.0, 7.5, 7.0, 6.5, 6.0, 5.5, 5.0, 4.5, 4.0, 3.5, or 3.0 or so. The unit of the thickness is mm. The thickness may be within a range of less than or equal to, or less than any one of the above-listed upper limits while being more than or equal to, or more than any one of the above-listed lower limits. As this thickness range is close to a value in the composite material exemplified in an example, more improved effect may be expected.

In the composite material, the plastic plate and/or the metal plate may have a concavo-convex shape. In this case, an internal space by the concavo-convex shape may be formed at the joint interface between the plastic plate and the metal plate.

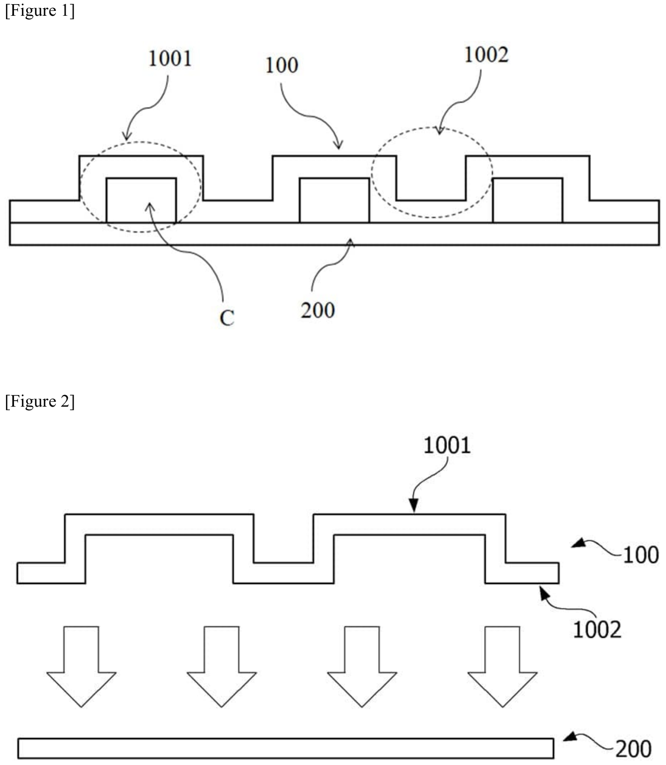

The concavo-convex shape can be formed while having a convex shape and a concave shape. Figure 1 is an example of a case where, among the plastic plate (100) and the metal plate (200), the plastic plate (100) is formed as a concavo-convex shape having a convex shape (1001) and a concave shape (1002), whereby an internal space (C) is formed at the joint interface. In the concavo-convex shape, the convex shape and the concave shape have relative concepts, and in this specification, the shape forming a surface in contact with another material is called a concave shape. Such a shape of Figure 1 may be formed by attaching a plastic plate (100) having a concavo-convex shape and a metal plate (200) to each other, as shown in Figure 2.

In the example of Figures 1 and 2, the plastic plate (100) has a concavo-convex shape, but the metal plate (200) may also have a concavo-convex shape, and in some cases, both the plastic plate (100) and the metal plate (200) may have a concavo-convex shape.

The internal space of the composite material may exhibit excellent airtightness.

For example, when a fluid such as coolant or air is injected into the sealed internal space, the airtightness is a characteristic of withstanding the pressure by the fluid, and preventing the relevant fluid from leaking out to the outside. This airtightness is not secured simply by achieving high bonding force.

The airtightness of such an internal space may be represented by a maximum allowable internal pressure. The maximum allowable internal pressure is an internal pressure achieved by injecting air into the internal space of the composite material (internal space in a sealed state), which means an internal pressure capable of maintaining the pressure substantially constant in bar units for a certain period (approximately 60 seconds) from the time point when the injection of the fluid injected to achieve the internal pressure is stopped. At this time, the injected fluid may be, for example, air. The matter that the internal pressure is maintained substantially constant may be a case to represent a 60-second pressure drop amount to be described below.

A method of evaluating such a maximum allowable internal pressure is described in "Test Example 4" item of this specification. For example, the lower limit of the maximum allowable internal pressure may be 1.5, 1.6, 1.7, 1.8, 1.9, 2.0, 2.1, 2.2, 2.3, 2.4, or 2.5 or so, and the upper limit thereof may be 5, 4.5, 4, 3.5, 3, 2.9, 2.8, 2.7, 2.6, or 2.5 or so. The unit of the maximum allowable internal pressure is bar. The maximum allowable internal pressure may be within a range of more than or equal to, or more than any one of the above-listed lower limits; or within a range of less than, or equal to or less than any one of the above-listed upper limits while being more than or equal to, or more than any one of the above-listed lower limits. As this maximum allowable internal pressure is close to a value in the composite material exemplified in an example, more improved effect may be expected.

The internal space may also have airtightness exhibiting a pressure drop rate of a certain level. The pressure drop rate is a rate of pressure drop measured from the time point when the fluid injection is stopped after air is injected into the internal space of the composite material (internal space in a sealed state) so that the maximum allowable internal pressure or a higher pressure is achieved, the unit of which is Pa/sec. A method of evaluating the pressure drop rate is described in "Test Example 4" of this specification. The upper limit of the pressure drop rate may be 20, 18, 16, 14, 12, 10, 8, or 6 or so, and the lower limit thereof may be 1, 2, 3, 4, 5, or 6 or so. The pressure drop rate may be within a range of less than, or equal to or less than any one of the above-listed upper limits; or within a range of less than, or equal to or less than any one of the above-listed upper limits while being more than or equal to, or more than any one of the above-listed lower limits. As the range is close to a value in the composite material exemplified in an example, more improved effect may be expected.

The internal space of the composite material may have airtightness representing a 60-second pressure drop amount of a certain level. The 60-second pressure drop amount means a value (P1-P2) obtained by injecting air into the internal space so that a target pressure (P1) is achieved, and then subtracting a pressure (P2) at a time point when 60 seconds have passed after the injection of air is stopped from the target pressure (P1). The target pressure may be the maximum allowable internal pressure or a higher pressure. A method for evaluating the 60-second pressure drop amount is described in "Test Example 4" of this specification. The lower limit of the 60-second pressure drop amount may be 1, 1.5, 2, 2.5, 3, 3.5, or 4 or so, and the upper limit thereof may be 20, 18, 16, 14, 12, 10, 8, 6, 5.5, 5, 4.5, 4, or 3.5 or so. The unit of the 60-second pressure drop amount is mbar. The 60-second pressure drop amount may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value in the composite material exemplified in an example, more improved effect may be expected.

The internal space may also exhibit a pressure reduction level in an appropriate level. Such a pressure reduction level may be confirmed according to Equation I below.

[Equation I]

$$LP = 100 \times (P_{MAX}-P_{60})/P_{MAX}$$

In Equation I, LP is the pressure reduction level, $P_{MAX}$ is the maximum allowable internal pressure, and $P_{60}$ is the 60-second pressure drop amount.

Upon measurement of the $P_{60}$ for confirming the LP of Equation I, the target pressure is set as the maximum allowable internal pressure. A specific method for confirming Equation I is described in "Test Example 4" of this specification.

The upper limit of the pressure reduction level LP may be 0.5, 0.4, 0.3, 0.200, 0.197, 0.194, 0.191, 0.188, 0.185, 0.182, 0.179, 0.176, 0.173, 0.170, 0.167, 0.164, 0.161, 0.158, 0.155, 0.152, 0.149, 0.146, 0.143, or 0.140 or so, and the lower limit thereof may be 0, 0.01, 0.05, 0.1, or 0.15 or so. The unit of the above LP is %. The pressure reduction level LP may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value in the composite material exemplified in an example, more improved effect may be expected.

In the composite material, the plastic plate and the metal plate bonded to each other may exhibit a bonding force of a certain level or more.

For example, the upper limit of the bonding force between the plastic plate and the metal plate in the composite material may be 200, 150, 100, 99, 98, 97, 96, 95, 94, 93, 92, 91, 90, 89, 88, 87, 86, 85, 84, 83, 82, 81, 80, 79, 78, 77, 76, 75, 74, 73, 72, 71, 70, 69, 68, 67, 66, 65, 64, 63, 62, 61, 60, 59, 58, 57, 56, 55, 54, 53, 52, 51, 50, 49, 48, 47, 46, 45, 44, 43, 42, 41, or 40 or so, and the lower limit thereof may be 20.0, 21.0, 22.0, 23.0, 24.0, 25.0, 30.0, 31.0, 32.0, 33.0, 33.1, 33.2, 33.3, 33.4, 33.5, 33.6, 33.7, 33.8, 33.9, 34.0, 34.1, 34.2, 34.3, 34.4, 34.5, 34.6, 34.7, 34.8, 34.9, 35.0, 35.1, 35.2, 35.3Pa, 35.4, 35.5, 35.6, 35.7, 35.8, 35.9, 36.0, 36.1, 36.2, 36.3, 36.4, 36.5, 36.6, 36.7, 36.8, 36.9, 37.0, 37.1, 37.2, 37.3, 37.4, 37.5, 37.6, 37.7, 37.8, 37.9, 38.0, 38.1, 38.2, 38.3, 38.4, 38.5, 38.6, 38.7, 38.8, 38.9, 39.0, 39.1, 39.2, 39.3Pa, 39.4, 39.5, 39.6, or 39.7 or so. The bonding force may be measured in the manner described in "Test Example 5" of this specification, the unit of which is MPa. The bonding force may be within a range of more than or equal to, or more than any one of the above-listed lower limits; or within a range of less than, or equal to or less than any one of the above-listed upper limits while being more than or equal to, or more than any one of the above-listed lower limits. As the range is close to a value in the composite material exemplified in an example, more improved effect may be expected.

In the composite material, the bonding force between the plastic plate and the metal plate may also be expressed by a shade ratio to be described below.

For example, the bonding region of the composite material may exhibit a shade ratio of a certain level. The shade ratio may be obtained by Equation 1 below.

[Equation 1]

$$G_R = 1 - (G_a/G_u)$$

In Equation 1, $G_R$ is the shade ratio, $G_a$ is an average of gray scales in an effective joint surface region of the bonding region between the plastic plate and the metal plate, and $G_u$ is an average of gray scales in an effective joint surface region of a reference specimen.

The average $G_a$ of the gray scales may be obtained by irradiating the bonding region with light, reflecting the irradiated light by the metal plate in the bonding region, and then receiving the reflected light. In a gray scale graph obtained by secondarily differentiating a gray scale graph obtained by the received light, a region between the point with the highest gray scale and the point with the second-highest gray scale or between two points with the highest gray scale may be designated as the effective joint surface region, and the average of the gray scales in the effective joint surface region may be designated as $G_a$.

The reflected light may be transmitted to a polarizing plate before receiving it, and then the reflected light may be received. In such a manner, irregularities unrelated to the bonding force exist in the bonding region, and it is possible to prevent errors in the gray scale graph from occurring by the irregularities.

Here, the reference specimen means a specimen in which the same plastic plate and metal plate as the composite material are laminated while contacting each other without the bonding region.

The shade ratio $G_R$ of Equation 1, which considers the gray scale average $G_u$ obtained for this reference specimen together with the gray scale average $G_a$ obtained for the bonding region, may represent the bonding force of the bonding region.

A more specific method of obtaining $G_R$, $G_a$, and $G_u$ above is summarized in "Test Example 6" of this specification.

It has been confirmed that the shade ratio $G_R$ and the bonding force of the bonding region in the composite material are substantially proportional.

The lower limit of the shade ratio $G_R$ may be 0.130, 0.135, 0.140, 0.145, 0.150, 0.155, 0.160, 0.165, 0.170, 0.175, 0.180, 0.185, 0.190, 0.195, 0.200, 0.205, or 0.210 or so, and the upper limit thereof may be 1.0, 0.99, 0.98, 0.97, 0.96, 0.95, 0.94, 0.93, 0.92, 0.91, 0.90, 0.89, 0.88, 0.87, 0.86, 0.85, 0.84, 0.83, 0.82, 0.81, 0.80, 0.89, 0.88, 0.87, 0.86, 0.85, 0.84, 0.83, 0.82, or 0.81 or so. The $G_R$ may be within a range of more than or equal to, or more than any one of the above-listed lower limits; or within a range of less than, or equal to or less than any one of the above-listed upper limits while being more than or equal to, or more than any one of the above-listed lower limits. As the range is close to a value in the composite material exemplified in an example, more improved effect may be expected.

To secure the bonding force or shade ratio $G_R$ of the plastic plate and the metal plate, and excellent airtightness, several conditions must be satisfied.

First, in the composite material, the plastic plate must be formed so that there are no or minimal pores inside, and it exhibits uniform physical properties overall.

Also, the surface of the metal plate in contact with the plastic plate must be appropriately treated.

In addition, upon bonding of the plastic plate and the metal plate, process conditions must be controlled according to the properties of the plastic plate and the metal plate.

Hereinafter, the contents will be explained.

As described above, for formation of the internal space, the plastic plate may be formed to have a concavo-convex shape. The method of forming the concavo-convex shape in the plastic plate is not particularly limited. For example, the concavo-convex shape may be formed by applying a known plastic forming method such as injection molding, vacuum molding, or press molding. However, in the process of forming the concavo-convex shape in the plastic plate, uneven pressures may be applied to the plastic plate in a high-temperature state, where in this process, pores or air bubbles may be formed in the inside of the plastic plate, and if the plastic plate contains a filler component, occurrence possibility of the air bubbles or pores may increase more. However, to secure the airtightness and bonding force, it is necessary to prevent air bubbles and pores from being formed in the inside of the plastic plate, so that the conditions for forming the concavo-convex shape must be considered. In addition, to secure the airtightness and bonding force, it is necessary that the plastic plate itself has a high strength uniformly, and further has a small deviation in strength between the convex and concave portions of the concavo-convex shape simultaneously.

To manufacture such a plastic plate, it is necessary to apply pressures to both the upper and lower portions of the plastic plate in a process of forming the concavo-convex shape. To this end, for example, the concavo-convex shape may be formed by a forming method that vacuum molding and press molding are mixed.

For example, the concavo-convex shape may be formed while applying pressures to the upper and lower portions of the plastic plate in a state where the plastic plate is heated to a certain temperature.

In this case, the relationship between the heating temperature and the glass transition temperature of the plastic plate (or the resin component included therein) may be adjusted. For example, when the heating temperature is T and the glass transition temperature is Tg, the upper limit of the absolute value of the temperature deviation calculated by an equation $100 \times (T-Tg)/Tg$ may be 60%, 55%, 50%, 45%, 40%, or 35% or so, and the lower limit thereof may be 1%, 5%, 10%, 15%, 20%, 25%, or 30% or so. The absolute value of the temperature deviation may be within a range of less than, or equal to or less than any one of the above-listed upper limits; or within a range of less than, or equal to or less than any one of the above-listed upper limits while being more than or equal to, or more than any one of the above-listed lower limits. The deviation may be a positive or negative number. By applying pressures to the heated plastic plate in such a range to form a concavo-convex shape, it is possible to provide a plastic plate in which pores are minimized inside and a uniform strength is secured. Such an effect can be further improved as the range approaches a value applied in an example.

Meanwhile, when applying pressures at the temperature thereto to form irregularities, the pressures may be applied simultaneously to the upper and lower portions of the plastic plate. In this case, when the magnitude of the pressure applied from the upper portion of the plastic plate is $P_U$ and the magnitude of the pressure applied from the lower portion is $P_L$, the upper limit of the absolute value of the pressure deviation calculated by an equation $100 \times (P_U-P_L)/P_L$ may be 60%, 55%, 50%, 45%, 40%, 35%, 30%, 28%, 26%, 24%, 22%, or 21% or so, and the lower limit thereof may be 1%, 5%, 10%, 15%, or 20% or so. The absolute value of the pressure deviation may be within a range of less than, or equal to or less than any one of the above-listed upper limits; or within a range of less than, or equal to or less than any one of the above-listed upper limits while being more than or equal to, or more than any one of the above-listed lower limits. The deviation may be a positive or negative number. By applying pressures to the heated plastic plate in such a range to form a concavo-convex shape, it is possible to provide a plastic plate in which pores are minimized inside and a uniform strength is secured. Such an effect can be further improved as the range approaches a value applied in an example.

The forming method is exemplified in examples of the present specification. However, the method applicable for implementation of the concave-convex shape is not limited to the method.

A glass transition temperature Tg of the plastic plate or the resin component included therein is selected according to the type of the applied plastic plate, and there is no special limitation thereto. In one example, the lower limit of the glass transition temperature Tg of the plastic plate or the resin component included therein may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, or 145°C or so, and the upper limit thereof may be 400°C, 390°C, 380°C, 370°C, 360°C, 350°C, 340°C, 330°C, 320°C, 310°C, 300°C, 290°C, 280°C, 270°C, 260°C, 250°C, 240°C, 230°C, 220°C, 210°C, 200°C, 190°C, 180°C, 170°C, 160°C, or 150°C or so. The glass transition temperature Tg may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits.

The plastic plate thus formed may exhibit uniform physical properties overall while having a concavo-convex structure. For example, even when a concavo-convex shape is formed on the plastic plate, the physical properties of the convex portion and the concave portion in the concavo-convex shape may be substantially equal. In addition, the plastic plate may exhibit a uniform strength while having a concavo-convex structure.

For example, in the plastic plate, a deviation between a tensile fracture strength of the concave portion and a tensile fracture strength of the convex portion may be adjusted within a predetermined range. When the tensile fracture strength of the concave portion is $S_M$ and the tensile fracture strength of the convex portion is $S_P$, the deviation between the tensile fracture strengths of the concave portion and the convex portion is an absolute value of a value calculated as $100 \times (S_P-S_M)/S_M$, the unit of which is %.

The upper limit of the deviation between the tensile fracture strengths of the convex portion and the concave portion may be 10%, 9%, 8%, 7%, 6%, 5%, or 4% or so, and the lower limit thereof may be 0%, 0.5%, 1%, 1.5%, 2%, 2.5%, 3%, or 3.5% or so. The deviation of the tensile fracture strengths of the convex portion and the concave portion may be within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

For example, the lower limit of the tensile fracture strength of the concave portion or the convex portion of the plastic plate or the average (arithmetic mean) of the tensile fracture strength of the concave portion and the tensile fracture strength of the convex portion may be 50, 52, 54, 56, 58, 60, 62, 64, 66, 68, 70, 72, 74, 76, 78, 80, 82, or 84 or so, and the upper limit thereof may be 1000, 950, 900, 850, 800, 750, 700, 650, 600, 550, 500, 450, 400, 350, 300, 250, 200, 150, 100, or 90 or so. The method of measuring the tensile fracture strength or average is described in "Test Example 2" of this specification, the unit of which is MPa. The tensile fracture strength or average may be within a range of more than or equal to, or more than any one of the above-listed lower limits; or within a range of less than, or equal to or less than any one of the above-listed upper limits while being more than or equal to, or more than any one of the above-listed lower limits. As the range is close to a value applied in an example, more improved effects may appear.

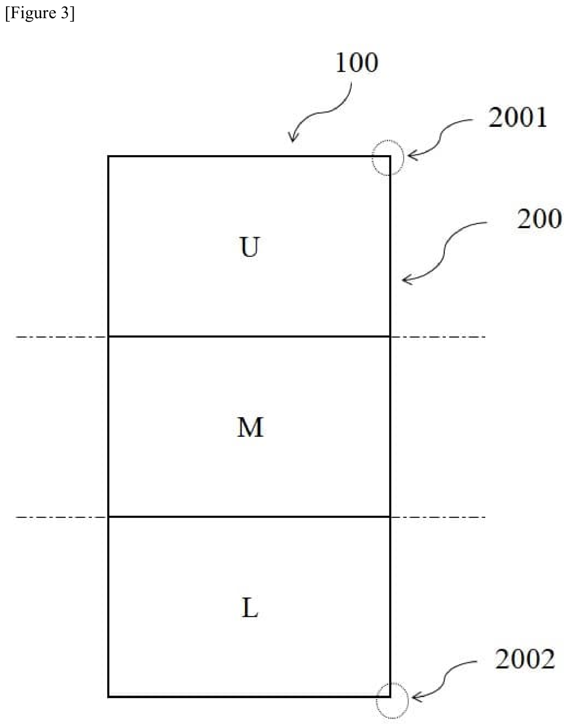

The plastic plate may exhibit a uniform strength overall. When the plate-shaped plastic plate has sides formed in an arbitrary first direction, the standard deviation of the tensile fracture strength of each of the upper end portion, middle portion, and lower end portion obtained by trisecting a molded body in a direction perpendicular to the sides of the first direction may be controlled to a certain level or less. The first direction is a direction parallel to any side of the plastic plate confirmed when the plate-shaped plastic plate has been observed along the thickness direction of the plastic plate. For example, referring to Figure 3, if the plastic plate is in the form of a rectangle as in Figure 3, the direction of the horizontal side (100) or the vertical side (200) of the relevant rectangle may be the first direction. In Figure 3, the results that the upper end portion (U), the middle portion (M), and the lower end portion (L) are defined by setting the vertical side (200) as the first direction, and trisecting the molded body in a direction perpendicular to the sides of the first direction and defining are indicated by dotted lines. In some cases, when the side of the plastic plate is not a straight line, the direction of the imaginary straight line connecting both end points (2001, 2002 in the case of Figure 3) of the relevant side may be set as the first direction.

The matter that the plastic plate is trisected along the first direction may mean that the plastic plate is divided so that the upper end portion (U), the middle portion (M), and the lower end portion (L) have equal areas.

When the tensile fracture strengths of the upper end portion, middle portion, and lower end portion are $S_U$, $S_M$, and $S_L$, respectively, and their arithmetic mean is A, the standard deviation is a value calculated as $\{[(S_U\text{-}A)^2+(S_M\text{-}A)^2+(S_L\text{-}A)^2]/3\}^{0.5}$.

For example, the lower limit of the arithmetic mean of the tensile fracture strengths of the upper end portion, the middle portion, and the lower end portion of the plastic plate may be 50, 52, 54, 56, 58, 60, 62, 64, 66, 68, 70, 72, 74, 76, 78, 80, 82, 84, 85, or 86 or so, and the upper limit thereof may be 1000, 950, 900, 850, 800, 750, 700, 650, 600, 550, 500, 450, 400, 350, 300, 250, 200, 150, 100, or 90 or so. The method of measuring the tensile fracture strength or average is described in "Test Example 3" of this specification, the unit of which is MPa. The tensile fracture strength may be within a range of more than or equal to, or more than any one of the above-listed lower limits; or within a range of less than, or equal to or less than any one of the above-listed upper limits while being more than or equal to, or more than any one of the above-listed lower limits. As the range is close to a value applied in an example, more improved effects may appear.

The upper limit of the standard deviation of the tensile fracture strength of the upper end portion, the middle portion, and the lower end portion of the plastic plate may be 60, 55, 50, 45, 40, 35, 30, 25, 20, 15, 10, 5, 4.5, or 4 or so, and the lower limit thereof may be 0, 1.5, 2, 2.5, 3, or 3.5 or so. The standard deviation may be within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

It is possible to provide a composite material having the desired bonding force and airtightness by applying such a plastic plate.

To further secure the bonding force and airtightness, an appropriate treatment may be performed on the metal plate.

For example, a surface, which is at least in contact with the plastic plate and forms the bonding region, among the surfaces of the metal plate, may be subjected to surface treatment. A pattern of Per may be formed on the surface of the surface-treated metal plate.

The term Per means a shape having grooves and burrs. Here, the term groove means a region recessed downward based on the average surface of the metal plate in the cross-section of the metal plate, and the term burr means a region protruded upward based on the average surface of the metal plate in the cross-section of the metal plate.

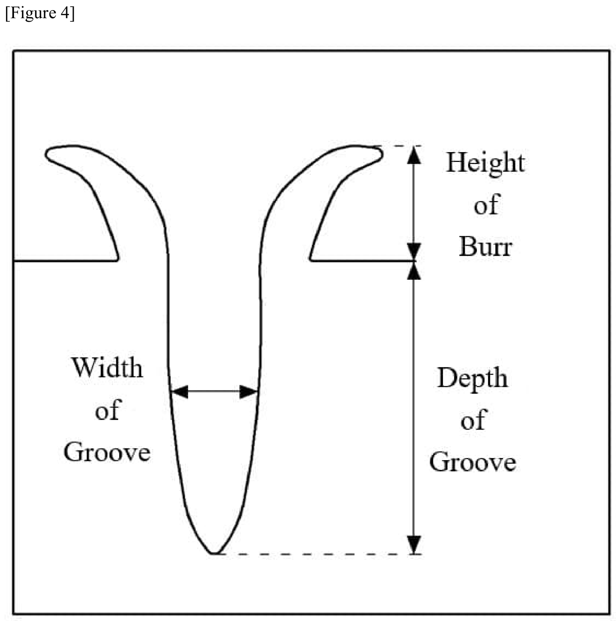

Such a pattern of Per may be a pattern formed by grooves on the surface of the metal plate, and such a groove may exhibit a line shape when the metal plate is observed from the surface. The Per may comprise the grooves and the burrs upon cross-section observation, as exemplarily shown in Figure 4. The surface of the metal plate, which is a reference for distinguishing the groove and the burr, may be the surface of the metal plate before the Per is formed. The cross-section of the metal plate where the groove and the burr are observed is a cross-section of the metal plate formed in a direction substantially perpendicular to the line shape by the Per recognized when the metal plate is observed toward the surface where the pattern of the Per is formed. In the case where the line by the Per is not a straight line, the cross-section is a cross-section of the metal plate formed along the width direction of the groove recognized when the metal plate is observed toward the surface where the pattern of the Per is formed.

The pattern of the Per may be formed on at least the surface of the metal plate in contact with the plastic plate.

For example, the lower limit of the ratio of the area of the metal plate on which the pattern of the Per is formed based on the entire area of the metal plate may be 14%, 15%, 15.5%, 15.9%, 16%, 16.05%, 16.1%, 16.15%, 16.2%, 16.25%, 16.3%, 16.35%, 16.4%, 16.45%, 16.5%, 16.55%, 16.6%, 16.65%, 16.7%, 16.75%, 16.8%, 16.85%, 16.9%, 16.95%, 17%, 17.05%, 17.1%, 17.15%, 17.2%, 17.25%, 17.3%, 17.35%, 17.4%, 17.45%, 17.5%, 17.55%, 17.6%, 17.65%, 17.7%, 17.75%, 17.8%, 17.85%, 17.9%, 17.95%, 18%, 18.05%, 18.1%, 18.15%, 18.2%, 18.25%, 18.3%, 18.35%, 18.4%, 18.45%, 18.5%, 18.55%, 18.6%, 18.65%, 18.7%, 18.75%, 18.8%, 18.85%, 18.9%, 18.95%, 19%, 19.05%, 19.1%, 19.15%, 19.2%, 19.25%, 19.3%, or 19.35% or so, and the upper limit thereof may be 40%, 35%, 30%, 29.5%, 29%, 28.5%, 28%, 27.5%, 27%, 26.5%, 26%, 25.5%, 25%, 24.5%, 24%, 23.5%, 23%, 22.5%, 22%, 21.5%, 21%, 20.5%, or 20% or so. The ratio may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

The lower limit of the ratio of the area of the metal plate on which the pattern of the Per is formed relative to the area of the surface of the metal plate in contact with the plastic plate among the surfaces of the metal plate may be 70%, 72%, 74%, 76%, 78%, 80%, 82%, 84%, 86%, 88%, 90%, 92%, 94%, 96%, 98%, or 100% or so, and the upper limit thereof may be 100%, 99%, 98%, 97%, 96%, 95%, 94%, 93%, 92%, 91%, or 90% or so. The ratio may be within a range of more than, or equal to or more than any one of the above-listed lower limits; or within a range of less than, or equal to or less than any one of the above-listed upper limits while being more than or equal to, or more than any one of the above-listed lower limits. As the range is close to a value applied in an example, more improved effects may appear.

Figure 4 is an exemplary diagram of a cross-section of a Per formed on a surface of a metal plate. The depth of the groove, the width of the groove, and the height of the burr in this Per may be adjusted in consideration of the desired bonding force or airtightness.

For example, the lower limit of the sum of the burr height and the groove depth may be 110, 115, 120, 125, 130, 135, 140, 145, 150, 155, 160, 165, or 170 or so, and the upper limit thereof may be 180, 175, 170, 165. 160, 155, 150, 145, or 140 or so. The unit of the sum of the burr height and the groove depth is $\mu$m. The sum of the burr height and the groove depth may be within a range of less than or equal to, or less than any one of the above-listed upper limits while being more than or equal to, or more than any one of the above-listed lower limits. In such a range, it is possible to more effectively secure the desired bonding force and airtightness. As the range is close to a value applied in an example, more improved effects may appear. The height of the burr is the shortest distance between the surface of the metal plate and the most protruding portion of the burr, and the depth of the groove is the shortest distance between the surface of the metal plate and the deepest portion of the groove. At this time, the surface of the metal plate, which is a reference for the height and the depth, may be the surface of the metal plate before the groove is formed.

For example, the lower limit of the groove depth may be 50, 60, 70, 80, 90, 95, 100, 105, 110, 115, 120, 125, 130, 135, 140, 145, or 150 or so, and the upper limit thereof may be 175, 170, 165, 160, 155, 150, 145, or 140 or so. The unit of the groove depth is $\mu$m. The groove depth may be within a range of more than or equal to, or more than any one of the above-listed lower limits; or within a range of less than, or equal to or less than any one of the above-listed upper limits while being more than or equal to, or more than any one of the above-listed lower limits. In such a range, it is possible to more effectively secure the desired bonding force and airtightness. As the range is close to a value applied in an example, more improved effects may appear.

For example, the lower limit of the groove width may be 50, 70, 90, 110, 130, 150, 160, or 170 or so, and the upper limit thereof may be 1,000, 900, 800, 700, 600, 500, 400, 300, 200, 190, 180, 170, or 160 or so. The unit of the groove width is $\mu$m. The groove width may be within a range of less than, or equal to or less than any one of the above-listed upper limits while being more than or equal to, or more than any one of the above-listed lower limits. In such a range, it is possible to more effectively secure the desired bonding force and airtightness. As the range is close to a value applied in an example, more improved effects may appear. The width of the groove is a width at the middle point of the groove depth.

For example, the lower limit of the height of the burr may be 10, 15, 20, 25, 30, 35, 40, 45, or 55 or so, and the upper limit thereof may be 180, 170, 160, 150, 140, 130, 120, 110, 100, 90, 80, 70, 60, 50, 40, or 30 or so. The unit of the height of the burr is $\mu$m. The height of the burr may be within a range of more than or equal to, or more than any one of the above-listed lower limits; or within a range of less than, or equal to or less than any one of the above-listed upper limits while being more than or equal to, or more than any one of the above-listed lower limits. In such a range, it is possible to more effectively secure the desired bonding force and airtightness. As the range is close to a value applied in an example, more improved effects may appear.

For example, the lower limit of the ratio (W/D) of the groove width (W) relative to the groove depth (D) may be 0.06, 0.07, 0.08, 0.09, 0.1, 0.2, 0.3, 0.4, 0.5, 0.6, 0.7, 0.8, 0.9, 1.0, 1.1, 1.2, or 1.3 or so, and the upper limit thereof may be 2.5, 2.0, 1.9, 1.8, 1.7, 1.6, 1.5, 1.4, 1.3, 1.2, or 1.1 or so. The ratio may be within a range of less than, or equal to or less than any one of the above-listed upper limits while being more than or equal to, or more than any one of the above-listed lower limits. In such a range, it is possible to more effectively secure the desired bonding force and airtightness. As the range is close to a value applied in an example, more improved effects may appear.

For example, the lower limit of the ratio (D/H) of the depth (D) of the groove relative to the height (H) of the burr may be 1.0, 1.5, 2.0, 2.5, 3.0, 3.5, 3.6, 3.7, 3.8, 3.9, 4.0, 4.1, 4.2, 4.3, 4.4, or 4.5 or so, and the upper limit thereof may be 6.0, 5.5, 5.4, 5.3, 5.2, 5.1, 5.0, 4.9, 4.8, 4.7, 4.6, 4.5, 4.4, 4.3, 4.2, 4.1, 4.0, 3.9, 3.8, or 3.7 or so. The ratio may be within a range of less than, or equal to or less than any one of the above-listed upper limits while being more than or equal to, or more than any one of the above-listed lower limits. In this range, it is possible to more effectively secure the desired bonding force and airtightness. As the range is close to a value applied in an example, more improved effects may appear.

The method of forming the pattern of the Per on the metal plate is not particularly limited. For example, the pattern may be formed by scanning the surface of the metal plate with a laser of an appropriate output, or by physically scratching.

For example, the method of forming the pattern of the Per may be a laser processing method. The laser scan speed upon laser processing is not particularly limited, but for example, the lower limit of the scan speed may be 710, 720, 730, 740, 750, 760, 770, 780, 790, 800, 810, 820, 830, 840, 850, 860, 870, 880, 890, or 900 or so, and the upper limit thereof may be 1000, 990, 980, 970, 960, 950, 940, 930, 920, 910, or 900 or so. The unit of the scan speed is mm/sec. The speed may be within a range of less than, or equal to or less than any one of the above-listed upper limits while being more than or equal to, or more than any one of the above-listed lower limits. As the scan speed has a lower value in the range, the amount of energy applied for surface treatment may be increased, and conversely, as it has a high value, the amount of energy applied may be reduced. Therefore, the scan speed may be appropriately adjusted in consideration of the desired pattern of the Per. However, the method of forming the pattern is not limited thereto.

The shape of the metal plate is not limited. For example, the metal plate may be plate-shaped. As described above, if necessary, the metal plate may also have a concavo-convex shape. The method of giving the concavo-convex shape to the metal plate is not particularly limited, and for example, the concavo-convex shape may be formed by appropriately bending or forming the metal plate using a known metal forming method. However, in the process of forming the concavo-convex shape in the metal plate, it may be difficult to secure airtightness due to the bending portion, and the like, so that the concavo-convex shape may not be formed in the metal plate.

The internal space formed in the composite material may form, for example, a flow path through which a cooling medium such as coolant or air flows.

The internal space may be formed, for example, by forming a concavo-convex shape on the plastic plate and/or the metal plate, and bonding the plastic plate and the metal plate.

The composite material, in which the bonding force and airtightness are secured, may be obtained by using the plastic plate and the metal plate as described above, and may be obtained by bonding the plastic plate and the metal plate applying a method to be described below.

For example, the method for manufacturing the composite material may comprise a step of manufacturing a laminate by laminating the plastic plate and the metal plate. In the process, a pattern of the Per may be formed on at least a surface in contact with the plastic plate among the surfaces of the metal plate facing the plastic plate.

To manufacture the composite material, a process of heating and/or pressurizing the laminate of the metal plate and the plastic plate may be performed. To secure the desired airtightness and bonding force, conditions of the heating and/or pressurizing process may be adjusted.

For example, the heating may be performed to satisfy Condition 1 below.

$$[\text{Condition 1}]$$

$$A \times Tg \leq T_P < Tg < T_I < Tm$$

In Condition 1, $T_P$ may be the temperature of the plastic plate in the laminate measured upon the heating, Tg may be the glass transition temperature of the plastic plate or the resin component included in the plastic plate, $T_I$ may be the interface temperature of the metal plate and the plastic plate of the laminate measured upon the heating, and Tm may be the melting temperature of the metal plate.

In Condition 1, A is any number, which may be, for example, the number of 0.35, 0.4, 0.45, 0.5, 0.55, or 0.6 or so.

As specified in Condition 1, the temperature $T_P$ of the plastic plate in the laminate measured upon the heating is controlled to be equal to or more than $A \times Tg$ and less than Tg.

The temperature $T_P$ of Condition 1 is adjusted according to the glass transition temperature Tg of the applied plastic plate or resin component. For example, the lower limit of the temperature $T_P$ may be 50°C, 52.5°C, 55°C, 57.5°C, 60°C, 62.5°C, 65°C, 67.5°C, 70°C, 72.5°C, 75°C, 77.5°C, 80°C, 82.5°C, 85°C, 87.5°C, or 90°C or so, and the upper limit thereof may be 200°C, 195°C, 190°C, 185°C, 180°C, 175°C, 170°C, 165°C, 160°C, 155°C, 150°C, 145°C, 130°C, 135°C, 130°C, 120°C, 125°C, 110°C, 105°C, 100°C, 95°C, or 90°C or so. The temperature $T_P$ may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

The glass transition temperature Tg of the plastic plate or the resin component included therein is selected according to the type of the applied plastic plate, and there is no special limitation thereon. In one example, the content on the glass transition temperature of the plastic plate may be applied in the same manner as in the above-described content.

In the heating process satisfying Condition 1, the ratio $Tg/T_P$ of Tg to $T_P$ may be adjusted. For example, the upper limit of the ratio $Tg/T_P$ may be 2.5, 2.4, 2.3, 2.2, 2.1, 2, 1.9, 1.8, 1.7, or 1.65 or so, and the lower limit thereof may be 1, 1.1, 1.2, 1.3, 1.4, 1.5, or 1.6 or so. The ratio $Tg/T_P$ may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

In Condition 1, the interface temperature $T_I$ of the metal plate and the plastic plate measured upon heating is determined by the glass transition temperature Tg and the melting temperature Tm. In one example, the lower limit of the temperature $T_I$ may be 100°C, 110°C, 120°C, 130°C, 140°C, 150°C, 160°C, 170°C, or 180°C or so, and the upper limit thereof may be 300°C, 290°C, 280°C, 270°C, 260°C, 250°C, 240°C, 230°C, 220°C, 210°C, 200°C, 190°C, or 180°C or so. The interface temperature may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

When Condition 1 is satisfied, the ratio $T_I/Tg$ of $T_I$ to Tg may be further adjusted. For example, the lower limit of the ratio $T_I/Tg$ may be 0.5, 0.6, 0.7, 0.8, 0.9, 1.0, or 1.1 or so, and the upper limit thereof may be 3.0, 2.9, 2.8, 2.7, 2.6, 2.5, 2.4, 2.3, 2.2, 2.1, 2.0, 1.9, 1.8, 1.7, 1.6, 1.5, 1.4, 1.3, or 1.2 or so. The ratio $T_I/Tg$ may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

The melting temperature of the metal plate is adjusted according to the type of metal, which is determined according to the unique melting temperature Tm of the metal plate. In one example, the content on the melting temperature of the metal plate may be applied in the same manner as in the above-described content.

When Condition 1 is satisfied, the ratio $Tm/T_I$ of Tm to $T_I$ may be adjusted. For example, the lower limit of the $Tm/T_I$ may be 1.5, 2, 2.5, 3, 3.5, 4, 4.5, 5, 5.5, 6, 6.5, 7, or 7.5 or so, and the upper limit thereof may be 50, 45, 40, 35, 30, 25, 20, 15, 10, 9, 8, 7, 6, 5, or 4 or so. The ratio $Tm/T_I$ may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

If the condition is maintained in the heating process, the desired composite material may be effectively manufactured. The reason is not clear, but it is presumed that when the temperature is adjusted to satisfy Condition 1 above, the melting state or fluidity of the plastic plate and/or the metal plate is optimized, and accordingly, a composite material having the desired airtightness and bonding force and no appearance deformation is obtained. In addition, such effects can be obtained even when the composite material is manufactured to have a large area.

The method in which such a condition is satisfied in the heating process is not limited. For example, a method of applying heat from the upper portion and/or the lower portion of the laminate may be used. If Condition 1 above is satisfied, the heat may be applied in any one direction of the upper portion or the lower portion. However, to more effectively satisfy the condition, it is advantageous for the heat to be applied from the upper portion and the lower portion of the laminate.

The heat as above may be applied, for example, using a known heater, such as a ceramic heater or a coil heater. For example, when a plastic plate is positioned at the top and a metal plate is positioned at the bottom, an upper heater may be positioned to heat the plastic plate and a lower heater may be positioned to heat the metal plate, and the upper and lower heaters may be operated simultaneously. Also, for example, when a metal plate is positioned at the top and a plastic plate is positioned at the bottom, an upper heater may be positioned to heat the metal plate and a lower heater may be positioned to heat the plastic plate, and the upper and lower heaters may be operated simultaneously.

In the manufacturing method, the pressurization may be performed separately after the heating, or may be performed simultaneously with the heating, as described above.

The method of performing this pressurization is not particularly limited. For example, a method of applying pressures to the laminate of the plastic plate and the metal plate by means of an appropriate mold or the like may be used. At this time, the pressure may also be applied only to a portion where the convex portion is not formed or a portion where the plastic plate and the metal plate directly contact each other in the laminate by a method of adjusting the shape of the mold, and the like.

This pressurization may be performed, for example, simultaneously at the upper portion and the lower portion of the laminate, or may also be performed only at the upper portion or the lower portion of the laminate.

The size of the pressure (P1) applied upon the pressurization is not particularly limited. The pressure may be adjusted to an appropriate level depending on the purpose. For example, the lower limit of the pressure (P1) may be 1000, 1500, 2000, 3000, 4000, 5000, 6000, 7000, 7500, 7600, 7700, 7800, 7900, 8000, 8100, 8200, 8300, 8400, 8500, 8600, 8700, 8800, 8850, 8900, 8950, 9000, 8950, 9000, 9050, 9100, 9150, or 9200 or so, and the upper limit thereof may be 11000, 10950, 10900, 10850, 10800, 10750, 10700, 10650, 10600, 10550, 10500, 10450, 10400, 10350, 10300, 10250, 10200, 10150, 10100, 10050, 10000, 9950, 9900, 9850, 9800, 9750, 9700, 9650, 9600, 9550, 9500, 9450, 9400, 9350, 9300, 9250, or 9200 or so. The unit of the pressure is $gf/cm^2$. The applied pressure (P1) upon pressurization may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

The time of the pressurization is also determined according to the purpose, which is not greatly limited. For example, the lower limit of the pressurization time may be 10 seconds, 20 seconds, 30 seconds, 40 seconds, 41 seconds, 42 seconds, 43 seconds, 44 seconds, 45 seconds, 46 seconds, 47 seconds, 48 seconds, 49 seconds, or 50 seconds or so, and the upper limit thereof may be 3600 seconds, 3400 seconds, 3200 seconds, 3000 seconds, 2800 seconds, 2600 seconds, 2400 seconds, 2200 seconds, 2000 seconds, 1800 seconds, 1600 seconds, 1400 seconds, 1200 seconds, 1000 seconds, 800 seconds, 600 seconds, 400 seconds, 200 seconds, 100 seconds, 85 seconds, 80 seconds, 75 seconds, 70 seconds, 65 seconds, 60 seconds, 55 seconds, or 50 seconds or so. The time of the pressurization may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. The pressurization time may also be appropriately adjusted depending on the pressure applied upon the pressurization, and the like.

As described above, the heating and pressurization may be performed simultaneously or sequentially.

For example, the heating and pressurization may be performed in a manner which comprises a first step of heating the laminate of the plastic plate and the metal plate and a second step of pressurizing the laminate.

In the above case, the second step may be performed in a state satisfying Condition 1 above. For example, the heating in the first step may be performed to satisfy Condition 1 above, and the second step may be started while maintaining this state.

The method for manufacturing the composite material may further comprise a step of cooling the laminate following the heating and pressurizing processes.

For manufacture of the desired composite material, the conditions in the cooling process may be adjusted. For example, the cooling process may also be performed while applying a pressure in a certain level to the laminate.

For example, the cooling process may be performed under a pressurizing condition in which $\Delta P$ of Equation 5 below is within a predetermined range. For example, following the heating and pressurizing processes (or the second step), the cooling process may be performed in a state where the pressure applied to the laminate is adjusted so that $\Delta P$ of Equation 5 below is within a predetermined range. In one example, the upper limit of the $\Delta P$ may be 600%, 550%, 500%, 450%, 400%, 350%, 310%, or 300% or so, and the lower limit thereof may be 50%, 100%, 150%, 200%, 250%, 290%, or 300% or so. The $\Delta P$ may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range is close to a value applied in an example, more improved effects may appear.

[Equation 5]

$$\Delta P = 100 \times (P2 - P3)/P3$$

In Equation 5, P2 is the pressure applied to the laminate in the pressurizing process before the cooling (e.g., the second step), and P3 is the pressure applied to the laminate in the cooling process. The P2 may be, for example, the same as the range of the pressure P1 applied upon the pressurizing as described above.

The cooling of the laminate may be natural cooling or forced cooling. In the case of natural cooling, it may be performed while maintaining the laminate under a low-temperature condition (e.g., room temperature condition), and forced cooling may be performed by contacting an appropriate cooling medium (e.g., cooling water).

The composite material may be manufactured through the above process. The method for manufacturing the composite material may further comprise any additional step required for the process. For example, in the method, a desorbing step may be performed after the cooling process.

As described above, in the composite material, the plastic plate and the metal plate may provide an internal space where airtightness is secured while representing excellent bonding force.

Such an internal space may form a flow path through which a cooling medium such as coolant or air flows. Such a flow path may be designed so that the cooling medium may effectively perform heat exchange with the heating element when the cooling medium is applied.

For example, the internal space of the joint interface between the plastic plate and the metal plate may form a flow path through which a fluid is movable, and in this case, the joint surface of the plastic plate and the metal plate may be formed to include an external joint surface existing outside the flow path and a plurality of internal joint surfaces existing inside the flow path.

The term internal joint surface is a region where the plastic plate and the metal plate are bonded, which means a joint surface formed so that in a process in which a fluid moves through the flow path, the fluid can be divided by the bonding region and then rejoined.

The term external joint surface is a region where the plastic plate and the metal plate are bonded, which means a region other than the internal joint surface.

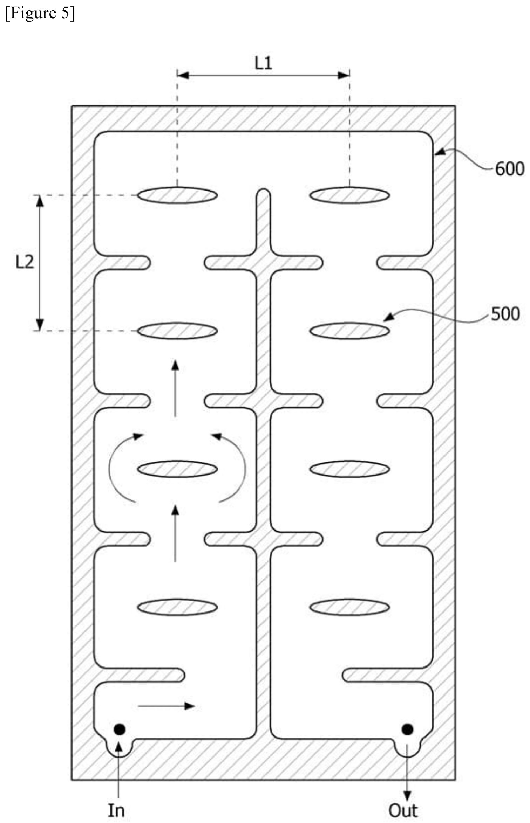

The joint surface will be explained with reference to Figure 5.

Figure 5 is a schematic diagram in the case where the composite material is observed from the front (for example, a direction perpendicular to the normal direction of the surface of the plastic plate), where the internal joint surface (500) and the external joint surface (600) are indicated by slashes, and the portion which is not indicated by slashes is the flow path (internal space).

As shown partially by the arrows in Figure 5, in the same form as in Figure 5, the fluid may be injected into an inlet (In), and then move through the flow path, and may be discharged through an outlet (Out).

Looking at the drawing, it can be known that the fluid encounters the internal joint surface (500) during the movement process, is divided by the internal joint surface (500), and then merges again within the flow path, but the external joint surface does not perform this function.

Such a fluid may move through the flow path while contacting the metal plate.

In one example, the flow path (internal space) may be formed so that the fluid injected into the joint interface between the plastic plate and the metal plate is discharged after moving an area equal to or more than a certain percentage of the entire area of the metal plate (or the plastic plate). This means, for example, that the area of the flow path occupies a certain percentage or more of the area of the metal plate. For example, the lower limit of the ratio ($100 \times AF/AM$) of the area of the flow path (AF) relative to the area of the metal plate (AM) may be 60%, 62%, 64%, 66%, 68%, 70%, 72%, 74%, 76%, 78%, or 80% or so, and the upper limit thereof may be 99%, 97%, 95%, 93%, 91%, 89%, 87%, 85%, 83%, or 81% or so. The above ratio ($100 \times AF/AM$) is equal to the ratio of the area of the metal plate (or plastic plate), through which the fluid injected into the joint interface between the plastic plate and the metal plate moves, to the area of the metal plate (or plastic plate). The above ratio may be within a range of more than or equal to, or more than any one of the above-listed lower limits; or within a range of less than, or equal to or less than any one of the above-listed upper limits while being more than or equal to, or more than any one of the above-listed lower limits. The larger the ratio, the more effectively the fluid may perform heat exchange. However, as the ratio is large, the area of the joint surface between the plastic plate and the metal plate decreases, and in that case, it is not easy to secure excellent bonding force, and the like. However, the composite material disclosed in this specification can secure high bonding force between the plastic plate and the metal plate, and airtightness of the internal space (flow path), while securing the ratio of $100 \times AF/AM$ as much as possible.

As illustrated in Figure 5, the internal joint surfaces (500) may be formed within the flow path, and a density of the internal joint surfaces (500) may be controlled to enable effective heat exchange. The density of the internal joint surfaces is a ratio of the number of internal joint surfaces formed within the flow path relative to the entire area of the flow path. The lower limit of the density of the internal joint surfaces may be 10, 15, 20, 25, 30, 35, 40, 45, 50, 51, 52, 53, or 54 or so, and the upper limit thereof may be 500, 450, 400, 350, 300, 250, 200, 150, 100, 95, 90, 85, 80, 75, 70, 65, 60, or 55 or so. The unit of the density is number/$m^2$. The density may be within a range of more than or equal to, or more than any one of the above-listed lower limits; or within a range of less than, or equal to or less than any one of the above-listed upper limits while being more than or equal to, or more than any one of the above-listed lower limits. The internal joint surface formed with the density may enable the fluid moving through the flow path to move while effectively scanning the entire area of the flow path, thereby enabling to perform stable and efficient heat exchange. As the range of this ratio is close to a value in the composite material exemplified in an example, more improved effect may be expected.

The internal joint surface may be designed such that R1 of Equation 2 below is within a certain range.

[Equation 2]

$$R1 = A1/A2$$

In Equation 2, A1 is the entire area of the flow path, A2 is the sum of the areas (total area) of the plurality of internal joint surfaces, and the units of A1 and A2 are the same.

The lower limit of R1 in Equation 2 may be 2, 4, 6, 8, 10, 12, 14, 16, 18, or 20 or so, and the upper limit thereof may be 90, 85, 80, 75, 70, 65, 60, 55, 50, 45, 40, 35, 30, 25, 23, or 21 or so. The R1 may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. The internal joint surface formed to satisfy the R1 range may enable the fluid moving through the flow path to move while effectively scanning the entire area of the flow path, thereby enabling to perform stable and efficient heat exchange. As the range of this ratio is close to a value in the composite material exemplified in an example, more improved effect may be expected.

The internal joint surface may be designed so that R2 of Equation 3 below is within a certain range.

[Equation 3]

$$R2 = A1/A3$$

In Equation 3, A1 is the entire area of the flow path, and A3 is the area of a single internal joint surface (one internal joint surface). For example, if the areas of the plurality of internal joint surfaces are not constant, the A3 may be the arithmetic mean of the areas of the plurality of internal joint surfaces. The units of the above A1 and A3 are the same.

The lower limit of R2 in Equation 3 may be 95, 100, 110, 120, 130, 140, 150, 160, or 165 or so, and the upper limit thereof may be 500, 450, 400, 350, 300, 250, 200, 190, 180, or 175 or so. The R2 may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. The internal joint surface formed to satisfy the range of R2 above may enable the fluid moving through the flow path to move while effectively scanning the entire area of the flow path, thereby enabling to perform stable and efficient heat exchange. As the range of this ratio is close to a value in the composite material exemplified in an example, more improved effect may be expected.

The internal joint surface may be designed so that R3 of Equation 4 below is within a certain range.

[Equation 4]

$$R3 = L^2/A3$$

In Equation 4, L is the interval between multiple internal joint surfaces, and A3 is the area of a single internal joint surface (one internal joint surface).

Here, the units of the square of L and A3 are the same.

Here, the interval between multiple internal joint surfaces is the interval between the centers of adjacent internal joint surfaces (for example, L1 and L2 in Figure 5). For example, when the centers of two arbitrary internal joint surfaces have been connected, if there is no other internal joint surface on the imaginary line connecting the centers, the two internal joint surfaces can be said to be adjacent to each other. In another example, when the fluid is divided by one internal joint surface while flowing through the flow path, and then merges again, and there is an internal joint surface which subsequently meets with it, the two internal joint surfaces can be said to be adjacent to each other. Meanwhile, here, the center of the internal joint surface means the center of gravity. In addition, when the intervals between the internal joint surfaces are multiple and not constant, the smallest interval among the multiple intervals, the longest interval among the multiple intervals, or the arithmetic mean of the multiple intervals is applied to Equation 5.

The lower limit of R3 in Equation 4 may be 1, 2, 3, 4, 5, 6, 7, 8, 9, 10, 11, 12, 13, or 14 or so, and the upper limit thereof may be 50, 45, 40, 35, 30, 25, 20, 15, 14, 13, 12, 11, 10, 9, or 8 or so. The R3 may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. The internal joint surface formed to satisfy the range of R3 above may enable the fluid moving through the flow path to move while effectively scanning the entire area of the flow path, thereby enabling to perform stable and efficient heat exchange. As the range of this ratio is close to a value in the composite material exemplified in an example, more improved effect may be expected.

The internal joint surface may be designed so that R4 of Equation 5 below is within a certain range.

[Equation 5]

$$R4 = A1/T^2$$

In Equation 5, T is the thickness of the flow path, and A1 is the entire area of the flow path.

Here, the units of the square of T and A1 are the same.

The lower limit of R4 in Equation 5 may be 5,000, 5,500, 6,000, 6,500, 7,000 7,500, 8,000, 8,500, or 9,000 or so, and the upper limit thereof may be 50,000, 45,000, 40,000, 35,000, 30,000, 25,000, 20,000, 15,000, 10,000, 9,500, or 9,200 or so. The R4 may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. The internal joint surface formed to satisfy the range of R4 above may enable the fluid moving through the flow path to move while effectively scanning the entire area of the flow path at an appropriate speed, thereby enabling to perform stable and efficient heat exchange. As the range of this ratio is close to a value in the composite material exemplified in an example, more improved effect may be expected.

The shape of the internal joint surface is not particularly limited, and if the fluid flowing through the flow path can be appropriately divided and then merge again, as described above, it can be formed in various shapes.

In the composite material, a ratio (AT/AA) of the entire area (AT) of the composite material relative to the total area (AA) of the external and internal joint surfaces may be adjusted. For example, the lower limit of the ratio (AT/AA) may be 1.5, 2, 2.5, 3, 3.5, 4, 4.5, or 5 or so, and the upper limit thereof may be 50, 45, 40, 35, 30, 25, 20, 15, 10, 9.5, 9, 8.5, 8, 7.5, 7, 6.5, 6, or 5.5 or so. The ratio may be within a range of more than or equal to, or more than any one of the above-listed lower limits; or within a range of less than, or equal to or less than any one of the above-listed upper limits; or within a range of less than, or equal to or less than any one of the above-listed upper limits while being more than or equal to, or more than any one of the above-listed lower limits. As the range of this ratio is close to a value in the composite material exemplified in an example, more improved effects may be expected.

The flow path designed to satisfy the conditions may enable the fluid moving therein to perform effective heat exchange while effectively scanning the entire area of the flow path at an appropriate speed. However, due to the design as above, it may be difficult to secure the joint efficiency of the plastic plate and the metal plate.

The present specification also discloses a use of the composite material. For example, the composite material may be used as a so-called heat sink. As is known, the heat sink is a component capable of absorbing or emitting heat from another object through direct or indirect thermal contact. Since such a heat sink is advantageous in having a surface area as large as possible, a composite material including a plastic plate having a concavo-convex shape as above and a surface-treated metal plate may be advantageously used as the heat sink.

The heat sink may comprise a plate-shaped plastic plate on which a concavo-convex shape is formed like the above-described composite material. Also, it may comprise a metal plate on which a Per pattern is formed like the above-described composite material. The contents about the plastic plate, for example, the contents about the resin component and the filler component, or the contents about the absolute value of the difference in the tensile fracture strength of the concave and convex portions, the standard deviation of the tensile fracture strength of each of the upper end portion, middle portion, and lower end portion, the thickness of the plate-shaped plastic plate, and the like may be applied in the same manner as in the above-described contents. In addition, the contents about the metal plate, for example, the contents about the Per pattern, or the contents about the thickness of the metal plate, the melting temperature, and the like may be applied in the same manner as in the above-described contents.

In addition, in the heat sink, like the above-described composite material, the contents about the maximum allowable internal pressure, or the content about the pressure drop rate, the contents about the 60-second drop amount, and the contents about the pressure reduction level LP according to Equation 1 may be applied in the same manner as in the above-described contents.

The present specification also discloses a device comprising the composite material.

For example, the device may comprise the composite material and a cooling medium. The cooling medium may be present in the flow path of the composite material, or may be prepared to be injectable into the flow path.

The device may be, for example, a cooling device such as the above-described heat sink, or a thermal interface material (TIM).

The type of the cooling medium is not particularly limited, and for example, a coolant such as water, or a gas such as air may be applied.

The device may also comprise a heating element and the composite material. The device may also comprise the heating element and the cooling device. In this case, the composite material and the heating element may be in thermal contact with each other. In this specification, the term thermal contact is the contact in which heat from the heating element can be transferred to the composite material, which does not necessarily mean a case where they are physically in contact with each other.

The type of the heating element is not particularly limited. The heating element may be, for example, any type of component, element, or device in which heat is generated in an operation or storage process, and such heat must be controlled. An example of such a heating element includes a battery cell, a battery module, or a battery pack, and the like, but is not limited thereto.

For example, the device may further comprise the cooling medium. The cooling medium may be present in the flow path of the composite material, or may be prepared to be injectable into the flow path.

**Advantageous Effects**

The present specification discloses a composite material and a use thereof. In one example, the composite material may be a composite material in which a metal plate and a plastic plate are bonded to each other, and may be a composite material in which an internal space exists at the joint interface of the metal plate and the plastic plate. According to the contents disclosed in the present specification, when the composite material is used as a heat dissipation material (e.g., a heat sink) in which a fluid such as a cooling medium moves into the internal space, the internal space can be designed so that the fluid can perform stable and effective heat exchange with a heating element, and the like. In addition, according to the contents disclosed in the present specification, high airtightness can be secured in the internal space so that the heat exchange performance can be maintained without loss in the long term. According to the contents disclosed in the present specification, even when the composite material is manufactured in a large area or large scale, it can exhibit the excellent heat exchange performance, and durability by airtightness. The present specification also discloses a use of the composite material.

**Description of Drawing**

Figure 1 is a diagram showing one example of a cross-section of a composite material.
Figure 2 is an exemplary process of forming the composite material of Figure 1.
Figure 3 is an exemplary process of trisecting a plastic plate.
Figure 4 is an exemplary diagram for explaining Per.
Figure 5 is an exemplary diagram for explaining a shape of a flow path, and a joint surface.
Figure 6 is a diagram explaining the process of forming a plastic plate with a concavo-convex shape.
Figure 7 is a diagram explaining a process of forming a plastic plate with a concavo-convex shape.
Figure 8 is a diagram for explaining a laser processing region performed in an example.
Figure 9 is an SEM image of a plastic plate with a concavo-convex shape manufactured in an example.
Figure 10 is an SEM image of a plastic plate with a concavo-convex shape manufactured in an example.
Figure 11 is a diagram explaining a content of collecting a sample from a plastic plate.
Figure 12 is a view derived from a process of evaluating airtightness of an internal space.
Figure 13 is a view derived from a process of evaluating airtightness of an internal space.
Figure 14 is a diagram for explaining a specimen measuring a tensile fracture strength.
Figure 15 is a diagram showing a process of evaluating a shade ratio.
Figure 16 is a view illustratively showing evaluation results of gray scales.
Figure 17 is a view showing results of differentiating the graph of Figure 16.
Figure 18 is a view showing a relationship between shade ratios and bonding force.

**Mode for Invention**

Hereinafter, the composite material, and the like will be specifically described through examples and comparative examples, but the scope of the composite material, and the like is not limited to the following examples.

**Example 1**

**Manufacturing of plastic plate**

As shown in Figure 1, a plastic plate (100) with a concavo-convex shape having a convex shape (1001) and a concave shape (1002) was manufactured.

The convex and concave shapes (1001, 1002) were adjusted so that a flow path of the shape shown in Figure 5 was formed after the plastic plate was bonded to the metal plate. The convex and concave shapes (1001, 1002) were formed so that the entire area of the flow path formed according to Figure 5 was about 146,180 mm$^2$ or so, the entire area of the external joint surface (600) was about 29,308 mm$^2$ or so, and the total area of the internal joint surfaces (500) was about 7,050 mm$^2$ or so. The internal joint surfaces (500) were formed so that a total of eight existed within the flow path, the respective internal joint surfaces (500) had the same area, the area of a single internal joint surface was about 881.26 mm$^2$ or so, and the interval between adjacent internal joint surfaces was 78.38 mm (L2 in Figure 5) or 114.45 mm (L1 in Figure 5) or so. Also, the entire area of the plastic plate confirmed from the front after forming the concavo-convex shape was about 182,538 mm$^2$ or so. In addition, the concave shape (1002) was formed to have a depth of about 4 mm or so.

A plastic plate (fabric), in the form of a rectangular plate, with a horizontal length of about 610 mm, a vertical length of about 308 mm, and a thickness of about 2 mm or so was prepared. The fabric was manufactured by applying a material in which mPPO (modified PPO (polyethylene oxide)) and glass fibers were blended in a weight ratio of 8:2 (mPPO: filler component) to an extrusion process. The mPPO as a resin component had a glass transition temperature (Tg) of about 145°C or so. As the glass fibers, glass fibers having a cross-sectional diameter of about 12.5 μm or so and an aspect ratio of about 24 or so was used.

The glass transition temperature was measured using a DSC (differential scanning calorimeter) device (DSC 8000, Perkin Elmer (USA)). Upon measurement, a temperature section was set from 40°C to 350°C, and the glass transition temperature was measured while confirming heat flow changes in heating and cooling mode methods with a temperature increase and decrease rate of 10°C. A sample applied to the measurement was used by having a diameter within about 2mm and weighing to have a weight of about 10mg or so.

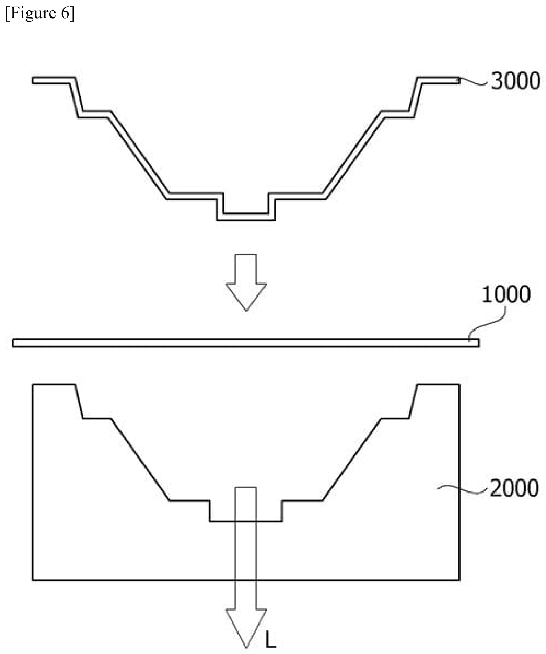

As shown in Figure 6, the fabric (1000) was placed on a first mold (2000) having an engraved shape corresponding to the desired concavo-convex shape. A second mold (3000) having a raised shape corresponding to the concavo-convex shape was placed on the upper portion of the fabric (1000).

The temperature of the surface of the fabric (1000) was maintained at about 195°C using a ceramic heater. The ceramic heater was located inside a temperature-raising device, and the temperature was raised to the desired temperature through the temperature control of the PLC (programmable logic controller) system in a state where the ceramic heater was positioned on the upper portion of the fabric. It was checked using a non-contact infrared thermometer whether the surface temperature of the fabric was controlled to the desired temperature.

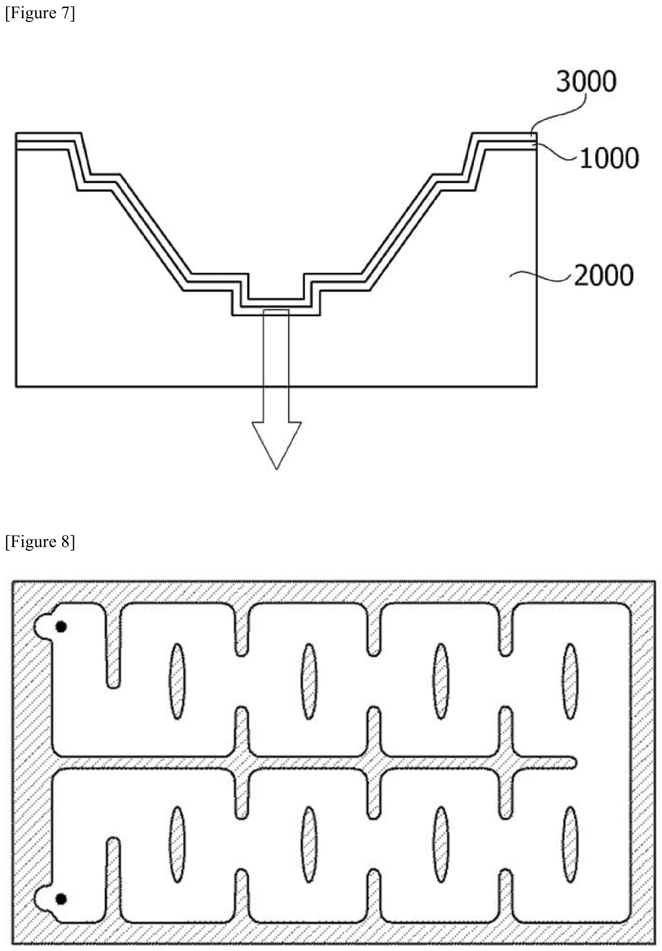

Subsequently, while maintaining the temperature, suction (L) was performed at the bottom of the first mold (2000), as shown in Figure 6, and simultaneously a pressure was applied to the fabric (1000) in the form as in Figure 7 by moving the second mold (3000) downward.

The suction (L) was performed by opening the gauge of the device 100%. This suction has a vacuum flow of about 1 atm or so based on the rate, and the pressure applied to the fabric is about 690.2 gf/cm$^2$ (applied load about 1500 kg) or so. The pressurization of the second mold (3000) was performed so that a pressure in a level of about 548.7 gf/cm$^2$ (applied load about 1000 kg) was applied to the molded body formed through the suction.

After maintaining the state for about 10 seconds, the temperature of the fabric (1000) was reduced to about 40°C to perform a cooling process. After the cooling process, the first and second molds (2000, 3000) were separated, and the plastic plate as the molded body was recovered.

## Manufacturing of metal plate

An aluminum plate (melting temperature of about 660.3°C), in the form of a rectangular plate, with a horizontal length of about 610 mm, a vertical length of about 308 mm, and a thickness of about 3 mm or so was prepared. The melting temperature of the aluminum plate was measured under the same conditions and device as those for measuring the glass transition temperature of the mPPO.

The surface of the metal plate was laser-processed to form a pattern of Per. The laser processing was performed only on the portion in contact with the plastic plate among the surfaces of the metal plate upon the manufacturing of the composite material. The region where the laser processing has been performed corresponds to the slashed region in Figure 8. The area of the slashed region was about 36358.42 mm$^2$ or so.

The laser processing was performed using a laser irradiation device (50W Fiber marking machine, K2 Laser) having a fiber source. The surface treatment of the metal plate was performed by irradiating it with the laser using the laser irradiation device. The laser irradiation was performed by cross-scanning (mesh form) the surface treatment surface at a scan rate of about 850 mm/sec or so, and the number of scans for the same surface was 4. The laser irradiation was performed by setting a laser output to about 50 W, and setting a repetition rate to about 70 kHz.

Through the treatment, a Per as in Figure 4 was formed on the surface of the metal plate. Figure 4 is a shape confirmed when the cross-section of the processed aluminum plate (the surface observed when cutting along the normal direction of the surface of the aluminum plate) has been observed. As in Figure 4, the Per included burrs and a groove. The width of the groove was about 150 μm or so, the depth of the groove was about 110 to 120 μm or so, and the height of the burr was about 30 μm or so.

**Manufacturing of composite material**

The prepared plastic plate (100) and metal plate (200) were laminated in the form shown in Figure 1, and bonded through heating and pressurization to manufacture a composite material.

The bonding was performed using a device (BG-200 (Modified), Sungshin Hydraulic Machinery) capable of forming a sealed internal space, heating the internal space, pressurizing the laminate in a heated state by adjusting the pressure of the internal space, and cooling. The laminate was placed in the internal space of the device (BG-200 (Modified). The plastic plate (100) of the laminate was placed on the upper portion, and the metal plate (200) was placed on the lower portion.

The laminate was heated in the state (heating process). The heating was performed by operating an upper heater located on the plastic plate (100) side of the laminate and a lower heater located on the metal plate (200) side simultaneously. The heating was performed until the temperature ($T_P$) of the plastic plate (100) became about 90°C or so and the interface temperature ($T_I$) of the plastic plate (100) and the metal plate (200) became about 180°C or so. The temperature ($T_P$) of the plastic plate (100) was measured by cross-checking using a TC (thermal couple) and a non-contact infrared thermometer built into the device (BG-200 (Modified), and the interface temperature ($T_I$) of the plastic plate (100) and the metal plate (200) was confirmed by placing a thermometer (a portable temperature loader (terminal couple)) directly on the interface.

When the heaters were operated by setting the temperature of the upper heater to 90°C and setting the temperature of the lower heater to 180°C, the temperature ($T_P$) of the plastic plate (100) and the interface temperature ($T_I$) were confirmed at the time when about 1400 seconds had passed since the start time of the operation.

The laminate was pressurized by adjusting the pressure of the sealed internal space of the device at the time when the temperature ($T_P$) of the plastic plate (100) and the interface temperature ($T_I$) reached the temperatures (pressurization process). The pressurization was performed by pressing the plastic plate using a mold to apply a load. At this time, the pressurization was performed so that the load was applied to the laminate at a pressure of about 9,200 gf/cm² (applied load about 20 tons) or so. Upon the pressurization, only the joint portion of the laminate (the surface-treated portion of the plastic plate (100) and the metal part (200)) was pressurized.

The pressurization was performed for about 50 seconds while maintaining the temperature ($T_P$) of the plastic plate (100) and the interface temperature ($T_I$) achieved by heating.

After the pressurization, a cooling process was performed (cooling process).

The cooling process was performed by flowing cooling water around the sealed space. The cooling was performed in a state where the applied pressure to the laminate was reduced to about 2300gf/cm² (applied load about 5 tons), and was performed until the temperature of the laminate (the temperature ($T_P$) of the plastic plate (100) and the interface temperature ($T_I$)) became about 60°C or less or so. After the cooling, the laminate was desorbed to recover a composite material.

**Example 2**

A composite material was manufactured in the same manner as in Example 1, except that the conditions were adjusted in the heating and pressurizing processes so that the interface temperature ($T_I$) of the plastic plate (100) and the metal plate (200) became about 160°C or so.

**Example 3**

A composite material was manufactured in the same manner as in Example 1, except that in the Per, the groove had a width of about 150 μm or so and a depth of about 140 μm or so, and the burr had a height of about 30 μm or so by changing the scanning speed of the laser to about 800 mm/sec upon processing the metal plate.

**Example 4**

A composite material was manufactured in the same manner as in Example 1, except that one, in which a pattern of Per having a groove with a width of about 150 μm or so and a depth of about 130 μm or so, and a burr with a height of about 30 μm or so was formed by performing laser treatment on an SUS 304 plate (melting temperature about 1400°C) in the form of a rectangular plate with a horizontal length of about 610 mm or so, a vertical length of about 308 mm or so, and a thickness of about 3 mm or so, was used as the metal plate.

**Comparative Example 1**

A composite material was manufactured in the same manner as in Example 1, except that one, in which a pattern of Per having a groove with a width of about 150 $\mu$m or so and a depth of about 95 $\mu$m or so, and a burr with a height of about 10 $\mu$m or so was formed by performing laser treatment on an SUS 304 plate (melting temperature about 1400°C) in the form of a rectangular plate with a horizontal length of about 610 mm or so, a vertical length of about 308 mm or so, and a thickness of about 3 mm or so, was used as the metal plate.

## Comparative Example 2

A composite material was manufactured in the same manner as in Example 1, except that in the Per, the groove had a width of about 150 $\mu$m or so and a depth of about 155 $\mu$m or so, and the burr had a height of about 30 $\mu$m or so by adjusting the scanning speed of the laser upon processing the metal plate.

## Comparative Example 3

A composite material was manufactured in the same manner as in Example 1, except that in the Per, the groove had a width of about 150 $\mu$m or so and a depth of about 95 $\mu$m or so, and the burr had a height of about 10 $\mu$m or so by adjusting the scanning speed of the laser upon processing the metal plate.

## Test Example 1.

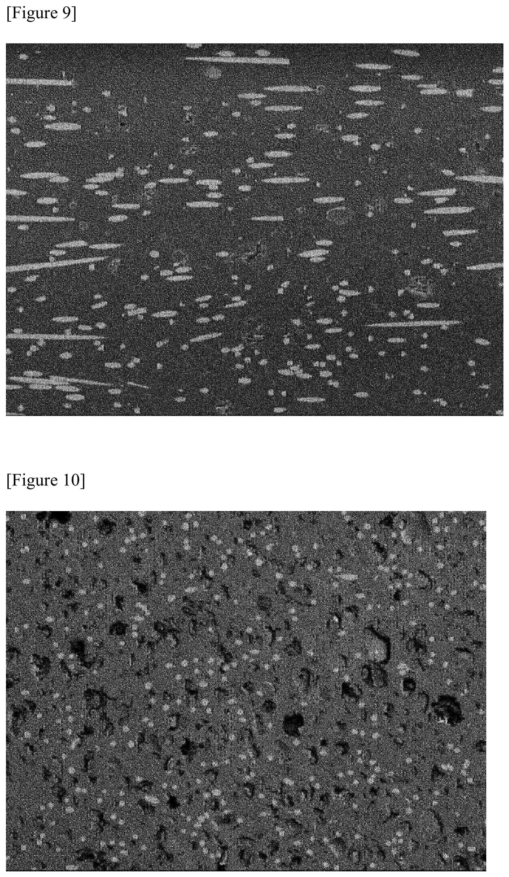

The cross-sections of the plastic plate of Example 1 and the reference plastic plate were photographed using a SEM (scanning electron microscope) device (JEOL, JSM-7800F model) to evaluate whether pores were formed. The plastic plates were photographed using the SEM device after the cross-sections were processed using a TXP preprocessing device. The reference plastic plate is a plastic plate in which the concavo-convex structure is formed in the same manner as in Example 1, but the concavo-convex structure is formed without performing pressurization by the upper mold. Upon the photographing, the BED-C observation mode was applied, and the magnification, working distance, and acceleration voltage were set to 100x, 15mm (Working Distance), and 15.0kV, respectively. Figure 9 is the results for the plastic plate of Example 1, and Figure 10 is the results for the reference plastic plate. Through Figures 9 and 10, it can be confirmed that almost no pores were confirmed inside the plastic plate applied in Example 1, whereas many pores exist inside the reference plastic plate.

## Test Example 2.

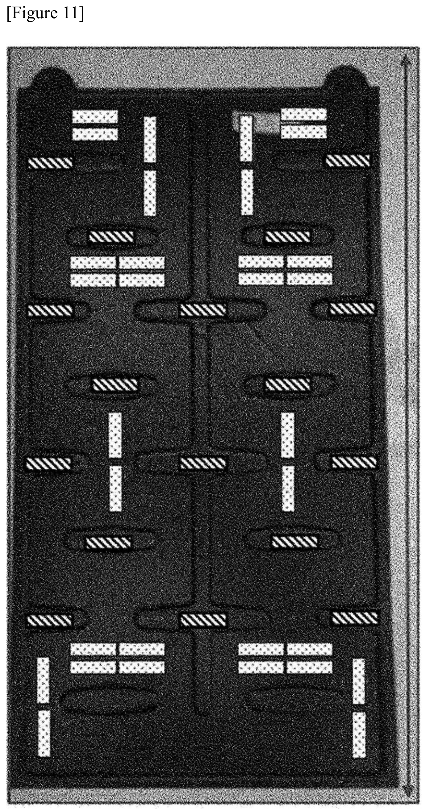

The tensile fracture strengths of the convex and concave shapes of the plastic plate of Example 1 and the reference plastic plate of Test Example 1 were evaluated. Figure 11 is a photograph of the front of the plastic plate. As shown in Figure 11, the concave shape (rectangle filled with slashed lines in Figure 11) and the convex shape (rectangle filled with dots in Figure 11) of the plastic plate were each cut to manufacture specimens. The cutting of the specimen was performed using a water jet process, and the specimen was formed to have a horizontal length of about 45 mm or so and a vertical length of about 12.5 mm or so. As indicated by the rectangles in Figure 11, a total of 32 specimens were obtained in the convex shape, and a total of 17 specimens were obtained in the concave shape.

The tensile fracture strength of the specimen was measured at room temperature (about 25°C) using a UTM (Universal Testing Machine) device. Both ends of the specimen in the horizontal direction were fixed by about 8 mm to the device, and the strength (tensile fracture strength) at the time when the specimen was broken was measured while uniaxially stretching it in the horizontal direction (direction parallel to both ends). The stretching was performed at a constant speed of about 50 mm/sec.

The measurement results were summarized and described in Table 1 below.

[Table 1]

|  | Convex shape (MPa) | Concave shape (MPa) | Deviation (%) |
|---|---|---|---|
| Example 1 | 81.82 | 84.91 | about 3.8 |
| Reference plastic plate | 44.52 | 45.61 | about 2.4 |

The deviation (%) in Table 1 is the results calculated by substituting the tensile fracture strength $S_M$ of the concave shape and the tensile fracture strength $S_P$ of the convex shape into the equation $100 \times (S_M - S_P)/S_P$.

**Test Example 3.**

Specimens of upper end, middle, and lower end portions were manufactured by trisecting the plastic plate of Example 1 and the reference plastic plate of Test Example 1 in the vertical direction (arrow direction in Figure 11) to have the same length, and then the tensile fracture strengths were evaluated for each portion in the same manner as in Test Example 2. The cutting of the specimens was performed using a water jet process.

As shown in Figure 11, specimens were obtained from the convex shape (rectangle filled with dots in Figure 11) and the concave portion (rectangle filled with slashed lines in Figure 11) of the plastic plate, and specimens were obtained from the upper end portion, the middle portion, and the lower end portion in the same manner as described above. When cutting the specimens, the specimens were cut so that the TD (transverse direction) direction of the plastic plate was the horizontal direction. The TD direction is the direction based on the extrusion process for manufacturing the fabric.

Using the method, four specimens (total of eight specimens) were collected from each of the convex and concave shapes of the upper end portion, and specimens were collected from the middle portion and the lower end portion in the same manner.

For the specimens, the tensile fracture strengths were evaluated in the same manner as in Test Example 2, and the results were summarized and described in Table 2.

The unit of the tensile fracture strength in Table 2 below is MPa, and this is the average value of the tensile fracture strengths measured for the specimens collected from each of the upper end portion, the middle portion, and the lower end portion.

In addition, the standard deviation in Table 2 below is a value obtained by substituting the tensile fracture strength $S_U$ of the upper end portion, the tensile fracture strength $S_M$ of the middle portion, and the tensile fracture strength $S_L$ of the lower end portion into the equation $\{[(S_U-A)^2+(S_M-A)^2+(S_L-A)^2]/3\}^{0.5}$, where A is the arithmetic mean of the $S_U$, $S_M$, and $S_L$.

[Table 2]

|  | $S_U$ | $S_M$ | $S_L$ | A | Standard deviation |
|---|---|---|---|---|---|
| Example1 | 89 | 81.82 | 90.75 | 87.19 | 3.86 |
| Reference plastic plate | 53.96 | 44.52 | 73.37 | 57.28 | 12.01 |

**Test Example 4.**

The airtightness of the composite material was evaluated. The airtightness was evaluated by applying a constant pressure to the internal space formed by the bonding of the concave shape (1002) of the plastic plate (100) and the metal plate (200) in the composite material, and observing the tendency of the pressure to be maintained or decreased.

In the composite material, there is an internal space formed by the bonding of the plastic plate (100) and the metal plate (200), and this internal space is sealed by the joint portion of the plastic plate (100) and the metal plate (200). However, there were two passages in the internal space in communication with the outside, and one of the two passages was sealed by fixing a jig on which a rubber ring gasket was mounted. In addition, the other passage was also sealed by fixing a jig on which a rubber ring gasket was mounted, but air was injectable into the passage.

The airtightness was evaluated depending on the following order.

Step 1: Injecting air until the pressure of the internal space in the composite material reaches the target pressure;
Step 2: Stabilization by injecting air so that the target pressure is maintained and stabilized for 20 seconds from the time when air injection starts;
Step 3: Stopping air injection after Step 2 and checking the pressure drop.

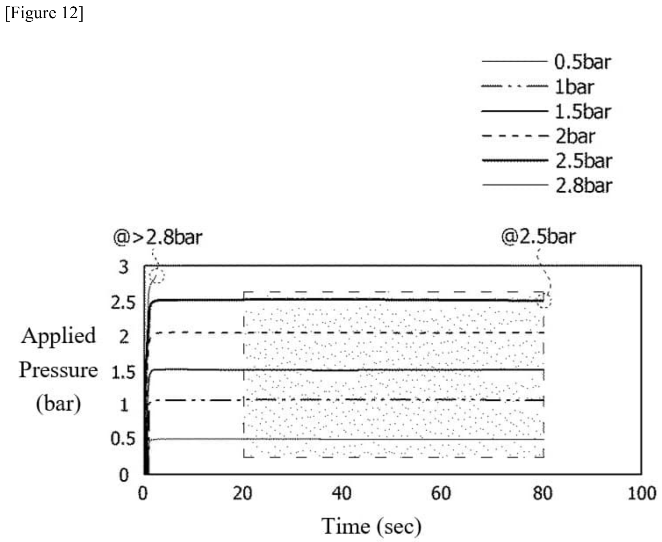

Figure 12 shows the results of the airtightness evaluation for the composite material of Example 1. Figure 12 shows that the airtightness evaluation is performed while stepwise increasing the target pressure in Steps 1 to 3 to 0.5 bar, 1 bar, 1.5 bar, 2 bar, 2.5 bar, and 3.0 bar.

That is, for the composite material, Steps 1 to 3 were performed by first setting the target pressure to 0.5 bar. Then, for the composite material, Steps 1 to 3 were performed sequentially by setting the target pressure to 1 bar again. The same process was repeated while increasing the target pressure by 0.5 bar each to 1.5 bar, 2 bar, 2.5 bar, and 3.0 bar.

Looking at Figure 12, it can be confirmed that when the process is performed, the pressure of the internal space is stably maintained for about 80 seconds or so up to the target pressure of 2.5 bar, but when the airtightness evaluation is performed by setting the target pressure to 3.0 bar, the internal pressure is not maintained while rapid reduction of the pressure appears at the time when the internal pressure becomes 2.8 bar. It appears that this pressure reduction is caused by the joint destruction of the joint interface between the plastic plate and the metal plate in the composite material, and the like. From these results, it can be confirmed that the maximum allowable internal pressure of the composite material of Example 1 is within the range of 2.5 bar or more and less than 2.8 bar. In the evaluations of Examples 2 and 3, the maximum allowable internal pressure was also confirmed to be within the range of 2.5 bar or more and less than 2.8 bar.

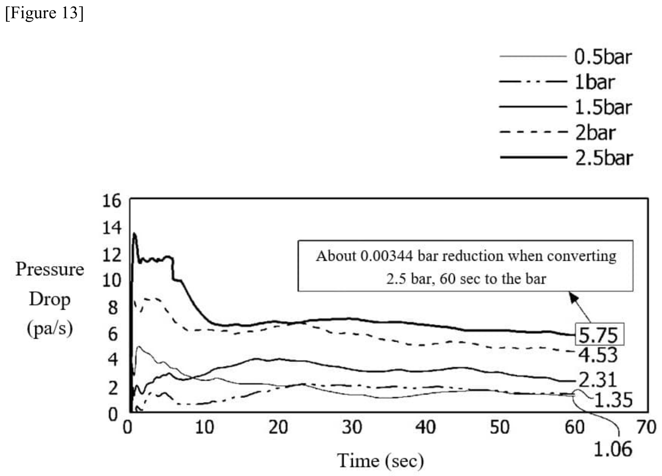

Figure 13 is the results in which the pressure drop forms in the internal space are confirmed in a state where the injection of air is stopped, following Step 2 of the airtightness evaluation process. Since the results of Figure 13 are the trend in Step 3 above, 0 seconds on the x-axis of Figure 13 is 20 seconds on the x-axis of Figure 12. The y-axis of Figure 13 is the pressure drop rate per unit time (unit: Pa/sec) at the relevant time point on the x-axis.

The results of the airtightness evaluation were summarized and described in Table 3 below.

In Table 3, the reference is for a composite material formed in the same manner as in Example 1, but it is the result obtained by applying the reference plastic plate of Test Example 1 as the plastic plate of the composite material.

[Table 3]

| | Example | | | | Comparative Example | | |
|---|---|---|---|---|---|---|---|
| | 1 | 2 | 3 | 4 | 1 | 2 | Reference |
| P1 | 2.5 | 2.5 | 2.5 | 2.5 | 1.5 | 1.0 | 1.5 |
| Prate | 5.75 | 7.26 | 6.97 | 5.91 | 6.58 | 3.98 | 5.36 |
| P2 | 0.0034 | 0.0043 | 0.0042 | 0.0035 | 0.0039 | 0.0024 | 0.0032 |
| Q | 0.136 | 0.172 | 0.168 | 0.14 | 0.26 | 0.24 | 0.21 |

In Table 3, P1 is the maximum allowable internal pressure obtained according to the measurement, where the unit thereof is bar, and Prate is the pressure drop rate, where the unit thereof is Pa/sec. In addition, P2 is the 60-second pressure drop amount, where the unit thereof is bar, and Q is the pressure reduction level, where the unit thereof is %.

The P1 (maximum allowable internal pressure) of Table 3 above describes the maximum pressure capable of maintaining the target pressure for about 60 seconds or more from the time point when the air injection is stopped when the air tightness evaluation is performed while stepwise increasing the target pressure in Steps 1 to 3 above from 0.5 bar by 0.5 bar each in the order of 0.5 bar, 1 bar, 1.5 bar, 2 bar, 2.5 bar, and 3.0 bar. Here, the matter of maintaining the target pressure means that the pressure measured in the unit of bar is maintained substantially constant. For example, in the case of Examples 1 to 4, when the target pressure was set to 2.5 bar, the pressure (bar) was maintained for about 60 seconds, but when it was set to 3.0 bar, a rupture occurred when it exceeded 2.8 bar, so that the maximum allowable pressure was defined to 2.5 bar. Meanwhile, the maximum allowable pressure of Comparative Example 3 was 1 to 1.5 bar.

Prate (pressure drop rate) describes the rate and level, and the like in which the pressure decreases from the time point when air injection is stopped (air injection is stopped immediately after stabilization by injecting air so that the target pressure is maintained and stabilized for 20 seconds in Step 2 above). This rate was measured in a state where air was injected up to the maximum allowable internal pressure (P1) for each composite material and then the air injection was stopped immediately after the stabilization, and was evaluated through the pressure reduction until the time point when the pressure reduction no longer occurred.

In Table 3, the 60-second pressure drop amount P2 is the difference (P2-P60) between the maximum allowable internal pressure (P1) and the internal pressure (P60) at the time point when 60 seconds have passed after the air stop during the process of evaluating the pressure drop rate.

The pressure reduction level Q of Table 3 is the result obtained by substituting the maximum allowable internal pressure P1 and the 60-second pressure drop amount P2 into the equation $100 \times \{1-(P1-P2)/P1\}$.

**Test Example 5.**

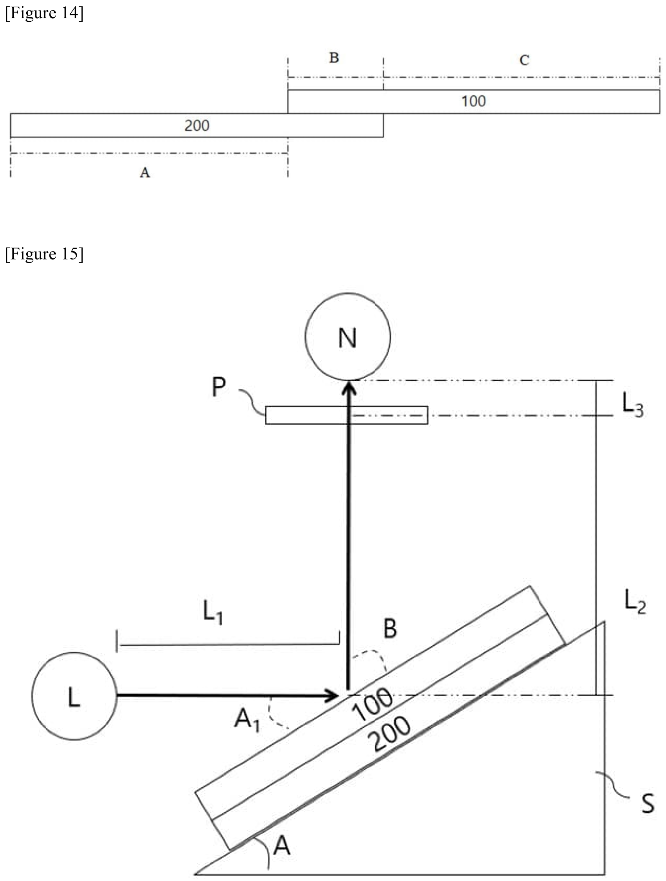

The bonding force between the plastic plate and the metal plate was evaluated for the composite materials of Examples or Comparative Examples. Each composite material was cut to manufacture a measurement specimen in the same form as in Figure 14, and the bonding force was measured for the specimen. The specimen of Figure 14 is the laminate of the plastic plate (100) and the metal plate (200) obtained from the composite material, and in the specimen, the length of the joint portion (portion B of Figure 14) is about 9 mm or so, the length of the unbonded portions of the plastic plate (100) and the metal plate (200) (portions A and C of Figure 14) is about 36 mm or so, and the width of the specimen is about 12.5 mm or so. In the case of being difficult to cut a specimen in the same form as in Figure 14 from a composite material, the specimen in the same form as in Figure 14 was manufactured by applying the same plastic plate and metal plate as those used upon manufacturing each composite material, and applying the same bonding method, and applied for evaluation.

The bonding force of the specimen was evaluated. The bonding force evaluated in this test example was measured in a manner corresponding to a so-called measurement method of a tensile shear strength. The bonding force was measured at room temperature (about 25°C) using a UTM (Universal Testing Machine, Zwick/roell Z030) device. The protruding portions of the metal plate (200) and the plastic plate (100) in the specimen as in Figure 14 (the portions indicated by A and C in Figure 14) were fixed to the device, and then the bonding force was evaluated while peeling the plastic plate (100) from the metal plate

(200). The peeling was performed at a peel angle of about 180 degrees or so (parallel between the metal-plastic material portions) and a peel rate of about 50mm/min or so. The evaluation results were summarized in Tables 4 and 5 below. In Tables 4 and 5, the unit of the bonding force is MPa.

[Table 4]

|  | Example | | | |
|---|---|---|---|---|
|  | 1 | 2 | 3 | 4 |
| Bonding force | 41.4 | 38.4 | 39 | 39.2 |

[Table 5]

|  | Comparative Example | | |
|---|---|---|---|
|  | 1 | 2 | 3 |
| Bonding force | 28.3 | 29.7 | 28.5 |

**Test Example 6.**

A specimen was manufactured by cutting the joint portion of the metal plate and the plastic plate in the composite material of Example 1. The specimen was manufactured to have a horizontal length of about 12.5 mm or so and a vertical length of about 9 mm or so.

Subsequently, as shown in Figure 15, the specimen was placed on a stand (S) having a gradient in an angle A. The standing was performed so that the metal plate (200) of the specimen was positioned closer to the stand (S) than the plastic plate (100). The angle A was about 30 degrees or so. Then, as shown in Figure 15, light was incident on the surface of the plastic plate (100) of the specimen at an incident angle of about 30 degrees (A1 of Figure 15) using a light source (L).

As the light source (L), an LED illumination emitting infrared light with a wavelength of about 1550 nm or so was used.

When light incident from the light source (L) was reflected by the metal plate (200), the reflected light was received by a NIR (Near Infrared) camera (N). A NIR (Near Infrared) polarizing plate (Edmund Optics, #12-475) (P) was positioned in the path of the reflected light, whereby the reflected light was transmitted through the polarizing plate, and then received by the NIR camera (N). The NIR polarizing plate (P) and the NIR camera (N) were positioned so that the reflected light was transmitted and received at an angle of about 30 degrees (angle B in Figure 15) based on the surface of the measurement specimen. The distance from the light source to the light incident point of the measurement specimen ($L_1$ in Figure 15) was set to about 11 cm or so, the distance from the reflection point to the polarizing plate (P) ($L_2$ in Figure 15) was set to about 15 cm or so, and the distance from the polarizing plate (P) to the camera (N) ($L_3$ in Figure 15) was set to about 2 cm or so. As the NIR camera (N), Aval Global's ABA-003VIR was used.

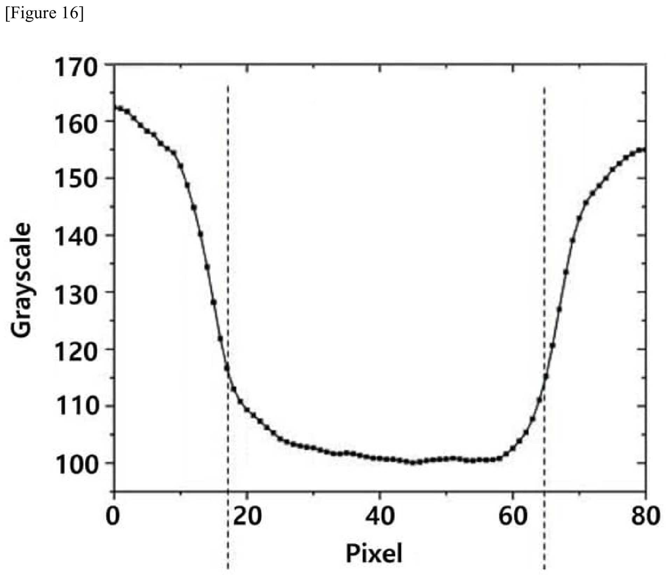

Through this type of photographing, the ABA-003VIR provides evaluation results of grayscales as shown in Figure 16. In Figure 16, the pixels on the x-axis correspond to the respective points of the specimen in the horizontal direction. That is, for example, the 0 point of the pixels on the x-axis of Figure 16 may correspond to the leftmost point of the measurement specimen in the horizontal direction, and the 80 point may correspond to the rightmost direction in the horizontal direction.

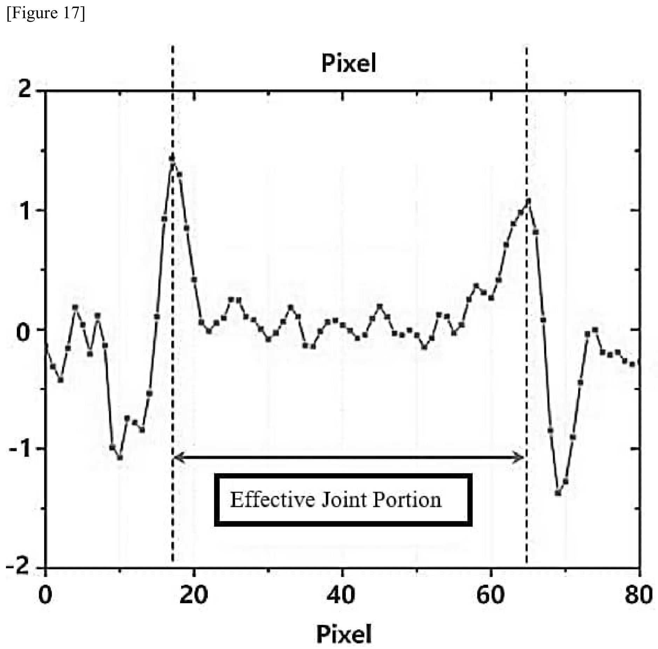

Using the Origin program, if the grayscale graph as in Figure 16 is secondarily differentiated, a grayscale graph as in Figure 17 may be obtained. In the obtained secondary differentiation result, $G_a$ was obtained by designating the surface between two points with the highest grayscale (or the point with the highest grayscale and the point with the next highest grayscale) as an effective joint surface, and calculating the average value of the graph within the effective joint surface.

A reference specimen was manufactured separately. The reference specimen was manufactured by cutting the same plastic plate and metal plate as those used in an example to have a horizontal length of about 12.5 mm or so and a vertical length of about 9 mm or so, and then simply laminating the cut plastic plate and metal plate. That is, the heating, pressurizing, and cooling processes were not performed on the reference specimen. The lamination was performed so that the laser-treated surface of the metal plate was in contact with the plastic plate.

For the reference specimen, a grayscale graph was obtained using ABA-003VIR in the same manner as in the measurement specimen, and a secondarily differentiated grayscale graph was obtained using the Origin program, and

EP 4 729 298 A1

then in the obtained secondary differentiation result, $G_u$ was obtained by designating the surface between two points with the highest grayscale (or the point with the highest grayscale and the point with the next highest grayscale) as an effective joint surface, and calculating the average value of the graph within the effective joint surface.

The obtained grayscale average values $G_a$ and $G_u$ and the shade ratio $G_R$ obtained by substituting the average values into the equation $G_R = 1-G_a/G_u$ were summarized and described in Table 6 below.

Table 6 shows the results of measuring $G_a$, $G_u$, and $G_R$ three times in total for the composite material of Example 1.

[Table 6]

|  | Example 1 | | |
| --- | --- | --- | --- |
|  | No. 1 | No. 2 | No. 3 |
| Gu | 129.8 | 129.8 | 129.8 |
| Ga | 104.29 | 103.91 | 103.4 |
| $G_R$ | 0.196 | 0.199 | 0.203 |

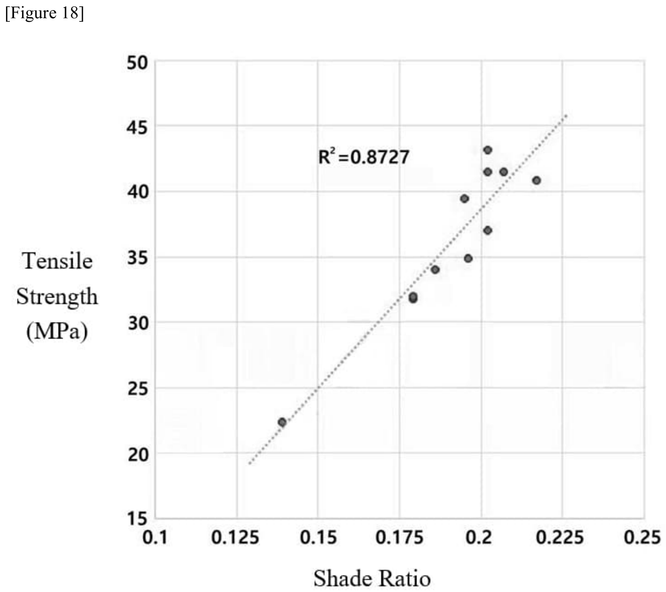

Figure 18 is a graph obtained by measuring the shade ratio $G_R$ for each composite material and comparing the results with the bonding force to summarize the relationship. It can be confirmed from Figure 18 that the shade ratio $G_R$ and the bonding force are proportional to each other. In the graph of Figure 18, when the shade ratio was x and the bonding force was y, the two had a relationship of approximately $y = 273.13x - 16.015$, and it was confirmed that the consistency between the data and the trend line was high, with $R^2$ being about 0.8727.

**Claims**

1.  A composite material, comprising

    a plastic plate and a metal plate which are bonded to each other,
    wherein
    a pattern of Per is formed on a surface, which is in contact with the plastic plate, among surfaces of the metal plate,
    the Per comprises a groove recessed downward and a burr protruded upward based on the surface of the metal plate, and
    the sum of the height of the burr and the depth of the groove is within a range of 110 to 180 $\mu$m.

2.  The composite material according to claim 1, wherein one or both plates of the plastic plate and the metal plate have a concavo-convex shape, and
    an internal space is formed by the concavo-convex shape at the joint interface between the plastic plate and the metal plate.

3.  The composite material according to claim 1, wherein a ratio of an area of the metal plate on which the pattern of Per is formed relative to an area of the metal plate in contact with the plastic plate is 70% or more.

4.  The composite material according to claim 1, wherein a ratio of the groove depth to the burr height is within a range of 1.0 to 6.

5.  The composite material according to claim 1, wherein a ratio of the groove width to the groove depth is within a range of 0.5 to 2.5.

6.  The composite material according to claim 1, wherein the burr height is 10 $\mu$m or more.

7.  The composite material according to claim 1, wherein the groove depth is 50 $\mu$m or more.

8.  The composite material according to claim 1, wherein the plastic plate has a side formed along a first direction, wherein an average value of tensile fracture strengths of an upper end portion, a middle portion and a lower end portion, the upper end, middle and the lower end portions being defined by trisecting the plastic plate along directions perpendicular to the side along the first direction, is 60 MPa or more; and wherein a standard deviation of the tensile

23

fracture strengths of the upper end portion, the middle portion, and the lower end portion is 10 or less.

9. The composite material according to claim 1, wherein the plastic plate has a concavo-convex shape; an average of tensile fracture strengths of a concave region and a convex region in the concavo-convex shape is 50 MPa or more; and a deviation of the tensile fracture strengths of the concave region and the convex region is 10% or less.

10. The composite material according to claim 2, wherein the internal space is configured to form a flow path through which fluid is movable, and the joint surface of the plastic plate and the metal plate comprises an external joint surface outside the flow path and a plurality of internal joint surfaces inside the flow path.

11. The composite material according to claim 10, wherein the internal joint surface is formed so that the fluid can be divided by the internal joint surface and then rejoined in a process of moving a fluid.

12. The composite material according to claim 10, wherein a R1 of Equation 2 below is within a range of 2 to 90, and a R2 of Equation 3 below is within a range of 95 to 500:

$$[\text{Equation 2}]$$

$$R1 = A1/A2$$

$$[\text{Equation 3}]$$

$$R2 = A1/A3$$

wherein, the A1 is the entire area of the flow path, the A2 is the total area of the internal joint surfaces, and the A3 is the area of a single internal joint surface.

13. The composite material according to claim 10, wherein a R3 of Equation 4 below is within a range of 1 to 50:

$$[\text{Equation 4}]$$

$$R3 = L^2/A3$$

wherein, the L is the interval between the internal joint surfaces, and the A3 is the area of a single internal joint surface.

14. The composite material according to claim 10, wherein a ratio (AT/AA) of the entire area (AT) of the composite material relative to the total area (AA) of the external and internal joint surfaces is within a range of 1.5 to 50.

15. A method for manufacturing a composite material by bonding a plastic plate and a metal plate, comprising

heating and pressurizing a laminate of the plastic plate and the metal plate, wherein
the heating is performed to satisfy Condition 1 below:

$$[\text{Condition 1}]$$

$$0.35 \times Tg \leq T_P < Tg < T_I < Tm$$

wherein, the $T_P$ is temperature of the plastic plate of the laminate measured upon the heating, the $Tg$ is the glass transition temperature of the resin component of the plastic plate, the $T_I$ is the interface temperature of the metal plate and the plastic plate measured upon the heating, and the $Tm$ is the melting temperature of the metal plate.

16. The method for manufacturing a composite material according to claim 15, wherein the heating is performed so that a ratio $Tg/T_P$ of $T_P$ to $Tg$ in Condition 1 is 2 or less.

17. The method for manufacturing a composite material according to claim 15, wherein the pressurizing is performed at a pressure within a range of 7000 to 11000 gf/cm$^2$.

18. The method for manufacturing a composite material according to claim 15, wherein the heating and pressurizing processes comprise:

a first step of heating the laminate of the plastic plate and the metal plate; and
a second step of pressurizing the laminate, following the first step.

19. The method for manufacturing a composite material according to claim 18, wherein the second step is performed in a state where Condition 1 is satisfied.

20. The method for manufacturing a composite material according to claim 16, further performing cooling the laminate, following the heating and pressurizing processes, wherein

the cooling is performed under a condition that ΔP of Equation 5 below is 200% to 400%:

[Equation 5]

$$\Delta P = 100 \times (P2 - P3)/P3$$

wherein, P2 is the pressure applied to the laminate in the pressurizing process before the cooling, and P3 is the pressure applied to the laminate in the cooling process.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

[Figure 12]

[Figure 13]

[Figure 14]

[Figure 15]

[Figure 16]

[Figure 17]

[Figure 18]

## INTERNATIONAL SEARCH REPORT

| International application No. |
|---|
| **PCT/KR2024/010968** |

### A. CLASSIFICATION OF SUBJECT MATTER

**B32B 37/08**(2006.01)i; **B32B 37/10**(2006.01)i; **B32B 37/06**(2006.01)i; **B32B 15/08**(2006.01)i; **B32B 3/30**(2006.01)i; **B32B 3/28**(2006.01)i

According to International Patent Classification (IPC) or to both national classification and IPC

### B. FIELDS SEARCHED

Minimum documentation searched (classification system followed by classification symbols)

B32B 37/08(2006.01); B23K 26/20(2006.01); B23K 26/324(2014.01); B29C 45/14(2006.01); B29C 65/44(2006.01); B29C 65/48(2006.01); H01L 21/56(2006.01); H01L 21/60(2006.01); H01M 10/613(2014.01); H01M 10/625(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플라스틱(plastic), 금속(metal), 접합(joint), 그루브(groove), 버(burr), 히트싱크 (heat sink), 공간(cavity), 유리전이온도(glass transition temperature)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0031092 A (LG CHEM, LTD.) 07 March 2023 (2023-03-07)<br>See paragraphs [0064], [0071], [0093] and [0178], and figure 6. | 1,3-9 |
| Y | | 2,10-14 |
| Y | KR 10-2022-0011174 A (MITSUI CHEMICALS, INC.) 27 January 2022 (2022-01-27)<br>See paragraph [0053], claim 1, and figure 3. | 2,10-14 |
| Y | JP 6589171 B2 (HIROTEC CORP. et al.) 16 October 2019 (2019-10-16)<br>See paragraph [0016], and claims 1 and 2. | 15-20 |
| Y | JP 2003-258030 A (MATSUSHITA ELECTRIC IND CO., LTD.) 12 September 2003 (2003-09-12)<br>See paragraph [0018], and claim 1. | 15-20 |
| A | JP 2019-126989 A (HITACHI METALS LTD.) 01 August 2019 (2019-08-01)<br>See entire document. | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2024** | **06 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010968**

| Patent document cited in search report | | | Publication date (day/month/year) | Patent family member(s) | | | Publication date (day/month/year) |
|---|---|---|---|---|---|---|---|
| KR | 10-2023-0031092 | A | 07 March 2023 | None | | | |
| KR | 10-2022-0011174 | A | 27 January 2022 | BR | 112021026005 | A2 | 08 February 2022 |
| | | | | CN | 114008836 | A | 01 February 2022 |
| | | | | EP | 3989331 | A1 | 27 April 2022 |
| | | | | MX | 2022000035 | A | 24 February 2022 |
| | | | | US | 2022-0247003 | A1 | 04 August 2022 |
| | | | | WO | 2020-255885 | A1 | 24 December 2020 |
| JP | 6589171 | B2 | 16 October 2019 | WO | 2017-090245 | A1 | 01 June 2017 |
| JP | 2003-258030 | A | 12 September 2003 | JP | 3960076 | B2 | 15 August 2007 |
| JP | 2019-126989 | A | 01 August 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230098469

- KR 1020230143283